# EUROPEAN PATENT APPLICATION

(11) **EP 3 961 155 A1**
(43) Date of publication of application: **02.03.2022**
(21) Application number: 21175928.7
(22) Date of filing: 26.05.2021
(51) Int. Cl.: G01C 21/20, G06T 7/70, G01C 21/28, G01C 21/30, G06K 9/00, G06F 16/29

(54) **POSE CALCULATION METHOD, DEVICE AND PROGRAM**

(30) Priority: 28.08.2020 JP 2020144088
(71) Applicant: FUJITSU LIMITED, Kanagawa 211-8588 (JP)
(72) Inventor: Kitaura, Asako, Kawasaki-shi, Kanagawa, 211-8588 (JP); Fujita, Takushi, Kawasaki-shi, Kanagawa, 211-8588 (JP)
(74) Representative: Hoffmann Eitle

(57) **Abstract**

A position and orientation calculation method performed by an information processing apparatus, the position and orientation calculation method includes comparing first route information of a plurality of environment maps including an acquisition position when a moving object or an acquisition apparatus mounted on the moving object acquires data with second route information acquired from a target moving object or an acquisition apparatus mounted on the target moving object whose position and orientation is to be calculated, and specifying a calculation environment map to be used for calculation of a position and orientation when the target moving object or the acquisition apparatus mounted on the target moving object acquires the data, from the plurality of environment maps, based on a result of the comparison.

## Description

### [Technical Field]

The embodiments discussed herein are related to a position and orientation calculation method, a position and orientation calculation program, and an information processing apparatus of calculating an acquisition position and an orientation of data acquired by a moving object.

### [Background Art]

In the related art, there is a technology called simultaneous localization and mapping (SLAM) that uses data related to surrounding conditions acquired while a moving object is moving as an input and simultaneously creates a traveling route of the moving object and a surrounding environment map. In addition, among the SLAM technologies, a technology for using, as an input, a moving image such as a video captured by a moving object to estimate a position and an orientation of a camera during traveling of the moving object is referred to as Visual-SLAM (hereinafter referred to as "V-SLAM").

The V-SLAM is a technology that may estimate and create a traveling route of an own vehicle (a position and an orientation of own vehicle) and a surrounding environment map (a three-dimensional position map of an image feature point group of surrounding subjects, hereinafter referred to as "3D environment map" or simply "map") by using a moving image, which is an example of data (hereinafter, referred to as "in-vehicle data") acquired by a moving object, captured by an in-vehicle camera as an input and using changes in a subject in the captured moving image. An own vehicle position and orientation of the moving object may be calculated and estimated from the moving image.

Light Detection and Ranging (LiDAR) is one of remote sensing technologies using light, and is capable of measuring scattered light with respect to laser radiation emitted in a pulse shape, and analyzing a distance to a target at a long distance and properties of the target. In the SLAM, it is also possible to calculate and estimate the own vehicle position and orientation of the moving object by using distance measurement sensor data using any electromagnetic wave or laser light such as LiDAR data which is an example of the in-vehicle data.

In recent years, with the spread of connected cars and the like, a service has been studied in which a vehicle is used as a sensor for grasping surrounding feature conditions by collecting and analyzing data (videos and the like) of in-vehicle devices and drive recorders of a moving object such as a vehicle at a center. For example, there are an event occurrence detection service for specifying and using a location of a falling object, a map change detection service for grasping an installation position change of a feature for map update, and the like.

As a related art, there is a technology for performing position and orientation estimation with high accuracy by using the V-SLAM.

### [Citation List]

### [Patent Literature]

[PTL 1] Japanese Laid-open Patent Publication No. 2020-67439

### [Summary of Invention]

### [Technical Problem]

Meanwhile, in order to realize these services while quickly responding to surrounding changes, it is desirable to estimate an own vehicle position and orientation at a time of acquiring in-vehicle data such as a moving image, LiDAR data, that is, a position and orientation of a camera which captures an in-vehicle image or an acquisition position and orientation of the in-vehicle data in an actual coordinate system at high speed and with high accuracy as possible.

In one aspect, an object of the present disclosure is to obtain an acquisition position and orientation of data acquired by a moving object or an acquisition apparatus mounted on the moving object at high speed and with high accuracy.

### [Solution to Problem]

In one embodiment, there is provided a position and orientation calculation method including: by an information processing apparatus, comparing route information of a plurality of environment maps including an acquisition position when a moving object or an acquisition apparatus mounted on the moving object acquires data with route information acquired from a target moving object or an acquisition apparatus mounted on the target moving object whose position and orientation is to be calculated; and specifying a calculation environment map to be used for calculation of a position and orientation when the target moving object or the acquisition apparatus mounted on the target moving object acquires the data, from the plurality of environment maps, based on a result of the comparison.

### [Effects of Invention]

According to one aspect of the present disclosure, an acquisition position and orientation of data acquired by a moving object or an acquisition apparatus mounted on the moving object may be obtained at high speed and with high accuracy.

### [Brief Description of Drawings]

FIG. 1 is an explanatory diagram illustrating an image of a road corresponding to each 3D environment map;
FIG. 2 is an explanatory diagram (part 1) schematically illustrating a 3D image feature group belonging to each 3D environment map group;
FIG. 3 is an explanatory diagram (part 2) schematically illustrating the 3D image feature group belonging to each 3D environment map group;
FIG. 4 is an explanatory diagram illustrating an example of an overview of a position and orientation calculation method and a position and orientation calculation program according to the present embodiment;
FIG. 5 is an explanatory diagram illustrating an example of a system configuration for implementing a position and orientation calculation method according to Embodiment 1;
FIG. 6 is a block diagram illustrating an example of a hardware configuration of a server;
FIG. 7 is a block diagram illustrating an example of a hardware configuration of an in-vehicle device;
FIG. 8 is an explanatory diagram illustrating an example of a configuration of a 3D environment map according to Embodiment 1;
FIG. 9 is a flowchart illustrating an example of processing of an environment map creation unit and a map registration unit according to Embodiment 1;
FIG. 10 is an explanatory diagram illustrating an example in which route information of a map is represented as a shape;
FIG. 11 is a flowchart illustrating an example of processing of a movement route and movement direction comparison unit, a map acquisition unit, and a position and orientation estimation unit according to Embodiment 1;
FIG. 12 is an explanatory diagram illustrating an example of a system configuration for implementing a position and orientation calculation method according to Embodiment 2;
FIG. 13 is an explanatory diagram illustrating an example of a configuration of a 3D environment map according to Embodiment 2;
FIG. 14 is a flowchart illustrating an example of processing of an environment map creation unit and a map deployment registration unit according to Embodiment 2;
FIG. 15A is a flowchart illustrating an example of processing of a movement route and movement direction comparison unit and a position and orientation estimation unit according to Embodiment 2; and
FIG. 15B is a flowchart illustrating an example of processing of a movement route and movement direction comparison unit and a position and orientation estimation unit according to Embodiment 2.

### [Description of Embodiments]

Hereinafter, embodiments of a position and orientation calculation method and a position and orientation calculation program disclosed herein are described in detail with reference to the drawings.

### (Overview of Position and Orientation Calculation Method and Position and Orientation Calculation Program)

A 3D environment map, which is a surrounding environment map, includes a 3D position group (3D data feature point group) of data features of in-vehicle data, analyzes which 3D map element (3D image feature point) of the map is imaged in which part of the in-vehicle data with respect to any in-vehicle data, and estimates (calculates) from which part data of the surrounding condition is acquired, that is, a position and orientation of a sensor (for example, an imaging apparatus or a distance measurement apparatus) of the in-vehicle data.

V-SLAM may be commonly used to estimate the imaging position and orientation of the moving image, which is an example of in-vehicle data, using the 3D environment map. In the V-SLAM, the moving image is input, an image feature point group of each image is extracted, and along with an image feature 3D position (a map of a 3D image feature group), an imaging position and orientation of each image is estimated from an appearance change in image of each image feature point group. Further, it is possible to estimate the imaging position and orientation in an actual coordinate system with high accuracy by using a global navigation satellite system (GNSS) information (for example, a Global Positioning System (GPS)) at a time of acquiring the moving image as an input.

The actual coordinate system is also referred to as a world coordinate system, is a coordinate system capable of uniquely expressing a location and a direction in the world, and latitude, longitude, altitude, direction, and the like are defined. There are various methods of defining the actual coordinate system, and any of these may be mutually converted.

In addition, every time the imaging position and orientation is estimated, the 3D environment map is not created, and the created 3D environment map is stored. Then, when estimating an imaging position and orientation of another moving image traveling on the same road, by using the created and stored 3D environment map, an estimation process on the imaging position and orientation may be simplified, and the imaging position and orientation may be calculated in the same coordinate system (the actual coordinate system having identical accuracy) as the used 3D environment map.

As described above, when the 3D environment map is prepared, position and orientation estimation (calculation) may be executed at a higher speed with a smaller amount of calculation. Thus, when a service is executed in a wide range, it is desirable to accumulate and manage the 3D environment map of each road in a service range. Further, in order to deploy the 3D environment map resistant to video changes depending on scenes, it is considered that a plurality of 3D environment maps are created and managed even on the same road due to ascending and descending of the road in which appearances of features are changed, a time such as weather or day and night, seasons of big changes in roadside trees, so that it is desirable to accumulate and manage more 3D environment maps.

Therefore, in order to estimate the imaging position and orientation in real-time and at a low cost by using the created and managed 3D environment map, a method of more quickly specifying a map to be used from a large number of 3D environment map group is desirable.

In general, as a method of searching for a map that matches any traveling from an accumulation database of a map group in a wide range in the related art, there is a method using a regional mesh. That is, there is a method in which a deployment map group is divided for each regional mesh, the current regional mesh is specified from position information (latitude and longitude information, and GPS information accompanying a moving image of an estimation target in a case of imaging position and orientation estimation) at any traveling desirable to a map, and a map group corresponding to the regional mesh is acquired.

The regional mesh is a grid area over a map obtained by dividing the entire country of Japan by latitude and longitude. The regional mesh is regulated by the Ministry of Internal Affairs and Communications for a use as a digitization of national land information and a management area for statistical information (JISX040). One regional mesh number may be calculated and specified from latitude and longitude values. Then, by using data of the 3D environment map of the specified mesh number, in-vehicle data, and GNSS data, a position and orientation of an acquisition sensor and a moving object of the in-vehicle data is estimated by using the method in the related art, such as SLAM.

In this map search and acquisition method, the number of roads belonging to the regional mesh is enormous, and it is not possible to specify which of these roads is a road related to the in-vehicle data. Therefore, a large number of 3D environment maps including undesirable maps are acquired, and it takes time and a memory cost at the time of acquisition, so that it is not possible to estimate a position and orientation in real-time.

Since the V-SLAM fails in position and orientation estimation in a case of an incorrect 3D environment map and the position and orientation estimation may be performed only in a case of a correct 3D environment map, it is not known until the position and orientation estimation is executed whether or not the map is the incorrect 3D environment map, so it is desirable to change the acquired map and repeat the position and orientation estimation process until the position and orientation estimation succeeds. Therefore, an execution cost of the undesirable map is high. In particular, when the respective maps are executed in sequence, the execution of the map to be actually executed is delayed, and it takes time until the position and orientation estimation may be performed, so that the position and orientation estimation in real-time may not be performed.

As another common method of searching for a map that matches any traveling from an accumulation database of a map group in a wide-range in the related art, there is a method of using road position and coupling information (latitude and longitude information including a coupling shape) of national roads such as road network information. That is, road position and coupling information of national roads such as road network information is prepared in advance, and deployment map groups being respectively associated with which road link of the road network information is handled in advance. Then, there is a method in which a road link related to position information (latitude and longitude information) of any traveling desirable to a map is specified, and a deployment map associated with the same road link is acquired.

The road network is data information representing roads in the country as coupling routes (links (road links)) coupling features (nodes having latitude and longitude values) such as intersections. The road network may hold, as attributes, various pieces of information such as a speed limit, a road width, the number of road lanes, and a link travel speed (a turnaround time).

In this map search method, both the deployed 3D environment map and traveling data (GPS or the like) for which position and orientation estimation is desired are searched respectively in association with the road position and the coupling information (road link information or the like) of all roads prepared in advance. Therefore, the position and orientation estimation may not be executed unless the road position and the coupling information (the road link information) of all the roads are separately deployed separately from the deployed 3D environment map group. In particular, the road position and coupling information (the road link information) of all the roads is desirable to have positional accuracy extent comparable to that of the GPS at any point. Therefore, information is desirable to be information along a road shape, and information contents are desirable to be updated and managed in accordance with a road change at all times. In addition, the amount of data is also enormous, and a maintenance cost after deployment is high. Further, every time contents of the road network information DB are updated, association of the 3D environment map DB is desirable to be reconsidered, so that the maintenance cost of the 3D environment map DB increases.

As described above, since the 3D environment map corresponding to the in-vehicle data for which position and orientation estimation is desired may not be correctly specified even when the created 3D environment map group are held in the method in the related art, the position and orientation estimation may not be executed in real-time, and an enormous data management cost for specifying the 3D environment map is desirable. With a position and orientation calculation method and a position and orientation calculation program according to the present embodiment, it is possible to specify a 3D environment map related to in-vehicle data for which imaging position and orientation estimation is desired, without using road map information such as road network information.

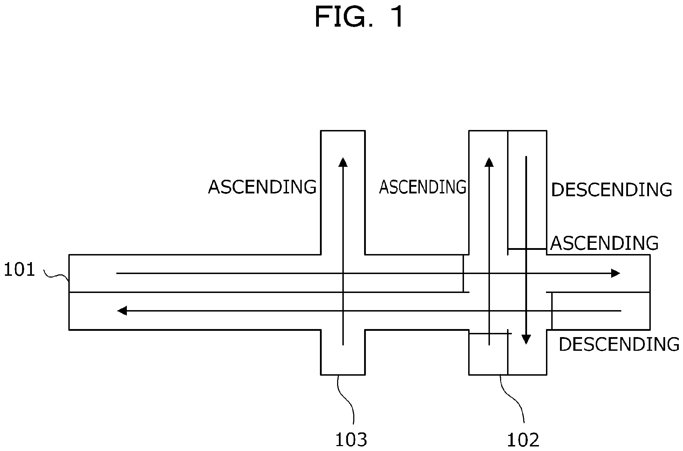

FIG. 1 is an explanatory diagram illustrating an image of roads corresponding to respective 3D environment maps. FIG. 1 illustrates 3 roads 101, 102, and 103. The road 101 is a road having two lanes including ascending and descending lanes, the road 102 is a road having two lanes including ascending and descending lanes and intersecting with the road 101, and the road 103 is an ascending one lane (one-way street) that intersects with the road 101.

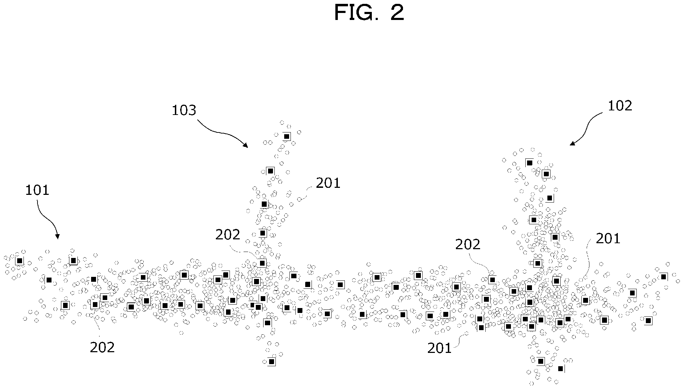

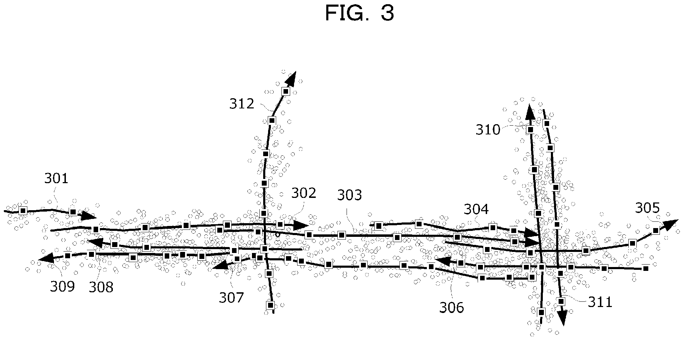

FIGs. 2 and 3 are explanatory diagrams schematically illustrating a 3D image feature group belonging to each 3D environment map group. FIG. 2 illustrates an overhead view, and FIG. 2 illustrates a 3D environment map group on the same road as the road illustrated in FIG. 1. Therefore, it is understood that the road 102 having the two lanes including ascending and descending lanes intersects with the road 101 having the two lanes including ascending and descending lanes, and the road 103 having one ascending lane (one-way street) intersects with the road 101 in the same manner as the road 102.

Then, in FIG. 2, 3D environment maps of the respective road are divided and created as 3D environment maps of a plurality of different road sections corresponding to a traveling section at a time of acquisition of each in-vehicle video to be used for creation. Accordingly, the 12 3D environment maps exist for a total of 5 respective ascending and descending lanes of the 3 roads 101 to 103. A range of each 3D environment map on each road, for example, which traveling section of an in-vehicle video is used to create the 3D environment map is optional, and that is, the 3D environment map group may be divided and created as a 3D environment map group of a section to a point (intersection) at which the road intersects with another road. Alternatively, the 3D environment map may be created as a section across the intersections.

FIG. 2 illustrates a "3D map element" 801 and a "data structured element" 802, which are 2 elements of a 3D environment map 522 described below. The "3D map element" 801 is indicated by a large number of "O" (round dots) 201 at the corresponding three-dimensional position. As understood from FIG. 2, a large number of "O" indicate a group of 3D image feature points "O" of the 3D environment map 522, and are an image feature point group that appears in an image when traveling on a road and that have actual coordinate 3D positions.

The "data structured element" 802 is, for example, when the "data structured element" 802 is a group of the "3D map elements" 801 that may be referred to in-vehicle data at a certain moment, and for convenience, FIG. 2 illustrates a plurality of "■" (rectangular dots) 202 placed at a three-dimensional position of an in-vehicle device (camera) that acquires the instant in-vehicle data.

That is, the "data structured element" 802 of the actual 3D environment map 522 is data obtained by grouping the viewable 3D map elements 801 for each piece of in-vehicle data acquired at a position of "■" 202 of the "data structured element" 802. Meanwhile, the data structured element 802 is not an indispensable element in the 3D environment map 522.

FIG. 2 simultaneously illustrates a plurality of "3D map elements" 801 ("○" 201) of 12 3D environment maps and a plurality of "data structured elements" 802 ("■" 202) of the 12 3D environment maps. Thus, it is understood that an overview of the positions of the 3 roads 101, 102, and 103 in the overhead view is found by a set of the plurality of "○" 201 and "■" 202.

In the related art, all of 12 3D environment map groups including 3D environment map groups of other 2 clearly different roads and opposite lanes and belonging to the same regional mesh are specified and acquired as a search result, and position and orientation estimation is tried, so that a cost for data acquisition and a calculation cost in the position and orientation estimation are desirable. When the position and orientation calculation process is executed by sequentially using the 3D environment maps, the position and orientation estimation may succeed only when the last 12th 3D environment map is acquired, and it is difficult to calculate the position and orientation in real-time. Note that, since an actual regional mesh has a wider range (for example, a third-order mesh is a section having a side of approximately 1 km), a larger number of roads and a larger number of 3D environment maps associated with the roads exist.

In the same manner as FIG. 2, FIG. 3 illustrates an overhead view, and in the same manner as FIG. 2, FIG. 3 illustrates a 3D environment map on the same road as the road illustrated in FIG. 1. Therefore, the road 101 is a road having two lanes including ascending and descending lanes, the road 102 is a road having two lanes including ascending and descending lanes intersecting with the road 101, and the road 103 intersects with the road 101 and is a road including one ascending lane (one-way street) is illustrated.

Further, unlike FIG. 2, polygonal line arrows 301 to 312 indicating route information of in-vehicle data 831 in route information 803 of the 3D environment map are illustrated in FIG. 3. The polygonal line arrow is route information of in-vehicle data at the time of creation, and the data structured element 802 is indicated by the three-dimensional position "■" 202 of the in-vehicle data at a certain moment as in FIG. 2, and is a position on this route information.

Specifically, 5 middle polygonal line arrows 301 to 305 are route information of in-vehicle data on the ascending road included in load 101, 4 middle polygonal line arrows 306 to 309 are route information of in-vehicle data on the descending road included in load 101, a middle polygonal line arrow 310 is route information of in-vehicle data on the ascending road included in load 102, a middle polygonal line arrow 311 is route information of in-vehicle data on the descending road included in load 102, and a middle polygonal line arrow 312 is route information of in-vehicle data on the ascending road included in load 103.

Note that, for simplicity, all the pieces of route information 803 of the 3D environment map groups illustrated in FIG. 3 illustrates, as an example, the 3D environment map group when a data acquisition direction (an imaging direction, an installation direction of the distance measurement apparatus, or the like) of the acquisition sensor at a time of creating the 3D environment map is approximately the same as a movement direction of the moving object (acquired by a front camera or the distance measurement apparatus installed facing forward). As described below, when the data acquisition direction is opposite to the movement direction of the moving object as in the case of in-vehicle data acquired by a rear camera or a distance measurement apparatus installed facing rearward, for example, a direction of the route information 803 of the 3D environment map (middle polygonal line arrow in FIG. 3) is a reverse direction. In the case of the 3D environment map of the ascending road included in load 101, the direction is not the right direction as indicated by the middle polygonal line arrows 301 to 305, and is a reverse left direction. As described above, when the 3D environment maps in which the data acquisition directions are opposite to each other are mixed, the arrow directions of the middle polygonal lines are mixed and are difficult to understand as a diagram, so that FIG. 3 illustrates only a map group in which the data acquisition direction is approximately equal to the movement direction.

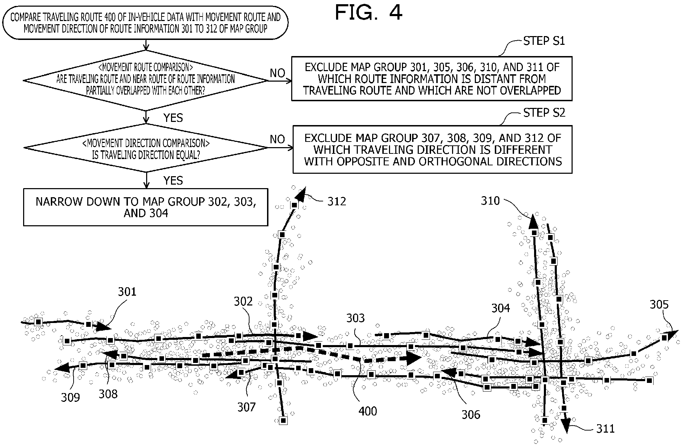

FIG. 4 is an explanatory diagram illustrating an example of an overview of a position and orientation calculation method and a position and orientation calculation program according to the present embodiment. FIG. 4 illustrates a state in which the movement route and movement direction comparison unit 513 narrows down the 3D environment maps 522 for any in-vehicle data as a position and orientation estimation target from the 3D environment map group in FIG. 3 for use in a position and orientation estimation unit 515.

In FIG. 4, a dotted line arrow 400 indicates a traveling route of any in-vehicle data that is a position and orientation estimation target. The traveling route 400 of the in-vehicle data that is the position and orientation estimation target is vectorized by arranging pieces of GNSS information acquired simultaneously with the in-vehicle data in the order of acquisition, and the vector direction means a traveling direction of the moving object on which the in-vehicle data acquisition apparatus is mounted.

Note that, for simplicity, it is assumed that the data acquisition direction (such as the imaging direction or the installation direction of the distance measurement apparatus) of the in-vehicle data as the position and orientation estimation target in FIG. 4 is also approximately equal to the movement direction of the moving object (acquired by the front camera or the distance measurement apparatus installed facing forward), in the same manner as the map groups in FIGs. 3 and 4. Unlike FIG. 4, when the data acquisition direction is a reverse direction, a correction process is performed on the direction of the traveling route 400 to be reversed or the like, in the same manner as route information of a map described below.

The traveling route 400 of the in-vehicle data indicated by the dotted line arrow and movement routes and movement directions of the route information 301 to 312 of the map groups indicated by the middle polygonal line arrows are compared by processing of the following 2 steps ("step S1": movement route comparison process and "step S2": movement direction comparison process).

### ("Step S1": Movement Route Comparison Process)

First, in "step S1", the traveling route 400 and the pieces of route information 301 to 312 of the map groups are compared with each other to determine whether or not the traveling route and a position of the route information are close to each other and the traveling route is partially overlapped. Here, it is understood that, regarding any of the 5 maps 301, 305, 306, 310, and 311, the traveling route 400 and the pieces of route information are far from each other and do not overlap each other. Therefore, it may be determined that these map groups (the 3D environment maps 301, 305, 306, 310, and 311) are not selected as the 3D environment map groups for calculation, and these maps may be excluded.

### ("Step S2": Movement Direction Comparison Process)

Next, regarding the map groups 302 to 304, 307 to 309, and 312 selected based on the determination that the traveling route and the route information are close to each other and the route information is partially overlapped, it is determined whether or not a traveling direction of the route information is equal to a traveling direction of the traveling route 400 in "step S2". Here, it is understood that traveling directions of the 3 maps 307, 308, and 309 are opposite to the traveling route 400. It is understood that the traveling direction of the map 312 is approximately orthogonal to the traveling route 400. Therefore, it is possible to determine that these map groups (the 3D environment maps 307, 308, 309, and 312) are not selected as the 3D environment map groups for calculation, and the maps may be excluded.

As a result, it is possible to narrow down to the remaining map group (the 3D environment maps 302, 303, and 304). Thereafter, each narrowed map group (the 3D environment maps 302, 303, and 304) is acquired from a 3D environment map DB 510 as a 3D environment map for calculation (a use target map), and is used for position and orientation estimation (calculation).

Then, a position and orientation is estimated (calculated) based on the acquired 3D environment map for calculation. In this position and orientation estimation process, by using the acquired data of the 3D environment map for position and orientation calculation, the processing target in-vehicle data that is a position and orientation estimation target, and the GNSS information, the imaging position and orientation is estimated (calculated) by using, for example, V-SLAM or the like.

Thus, it is possible to perform the position and orientation estimation in real-time by reducing a data acquisition cost and a position and orientation estimation execution cost for the undesirable 3D environment map, and shortening a time until the position and orientation estimation is completed.

Hereinafter, detailed contents of a position and orientation calculation method and a position and orientation calculation program will be described in Embodiment 1 and Embodiment 2.

### (Embodiment 1)

### (System Configuration Example)

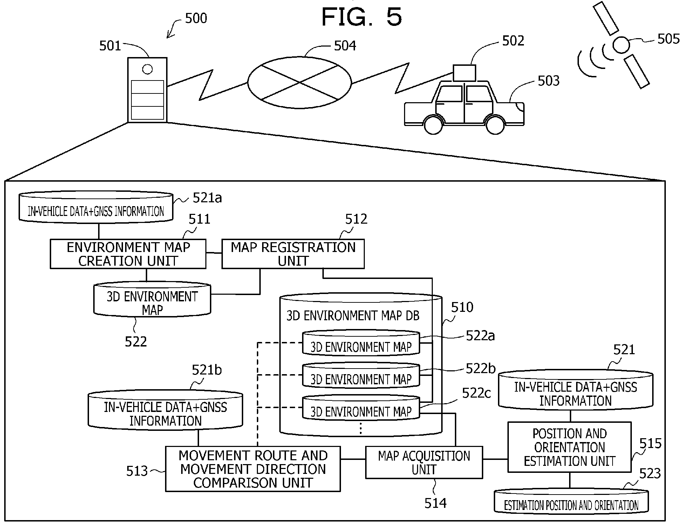

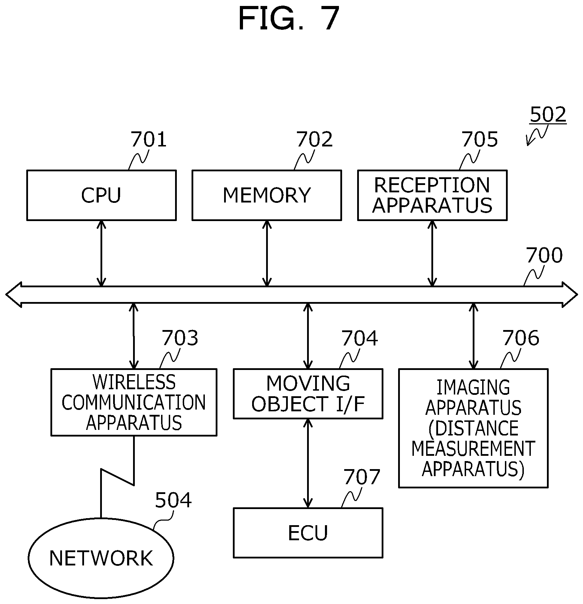

FIG. 5 is an explanatory diagram illustrating an example of a system configuration for implementing a position and orientation calculation method according to Embodiment 1. In FIG. 5, a system (a moving object position and orientation calculation system 500) that implements the position and orientation calculation method according to Embodiment 1 includes a server 501 and an in-vehicle device 502 mounted on a moving object 503. The in-vehicle device 502 is mounted on the moving object 503, and collects GNSS information from a satellite 505 and a moving image from an in-vehicle camera (an imaging apparatus 706 illustrated in FIG. 7 described below).

Then, the moving object position and orientation calculation system 500 is configured with the server 501 and the in-vehicle device 502 being connected by a network 504. The moving object position and orientation calculation system 500 may realize functions of the moving object position and orientation calculation system 500 by a cloud computing system (not illustrated).

Specifically, the moving object 503 is, for example, a connected car that collects data. The moving object 503 may be a general passenger vehicle, a commercial vehicle such as a taxi, a two-wheeled vehicle (motorcycle or bicycle), a large-sized vehicle (bus or truck), or the like. The moving object 503 may be a ship that moves on the water, an airplane that moves over the sky, an unmanned airplane (drone), a self-moving robot, or the like.

The in-vehicle device 502, which is an example of an acquisition apparatus, collects information on a moving image of the in-vehicle camera (the imaging apparatus 706). The in-vehicle device 502 collects information on the moving object 503 including GNSS information which is an example of positioning information. The information on the moving object 503 also may include orientation information or the like on the moving object 503, collected from the moving object 503. The in-vehicle device 502 may collect information on an imaging time and the like.

The in-vehicle device 502 may be a dedicated apparatus mounted on the moving object 503 or may be detachable device. The in-vehicle device 502 may be a drive recorder or the like mounted on a general passenger vehicle, a commercial vehicle such as a taxi, or the like. Further, a mobile terminal apparatus such as a smartphone, a tablet terminal apparatus, or the like having a communication function may be used in the moving object 503. All or some of various functions of the in-vehicle device 502 may be achieved by using a function included in the moving object 503.

Therefore, the expression "in-vehicle" in the in-vehicle device 502 means that the device is mounted on the moving object 503, and is not limited to the meaning of a dedicated apparatus mounted on the moving object 503. The in-vehicle device 502 may be any type of apparatus as long as the apparatus has a function capable of collecting information in the moving object 503 and transmitting the collected information to the server 501.

The in-vehicle device 502 acquires information (in-vehicle data) of the moving object 503 that includes information on in-vehicle data and GNSS information, and stores the acquired in-vehicle data. Then, the stored in-vehicle data is transmitted to the server 501 via the network 504 by wireless communication. Various types of data including a program distributed from the server 501 is received by wireless communication via the network 504.

The in-vehicle device 502 may acquire information on another moving object 503 traveling nearby by a short distance communication function, and may transmit the information to the server 501. The in-vehicle devices 502 may communicate with each other by the short distance communication function, and may communicate with the server 501 via another in-vehicle device 502.

As described above, in the moving object position and orientation calculation system 500, the server 501 may acquire in-vehicle data from the in-vehicle device 502 mounted on the moving object 503, and may distribute various types of data to each in-vehicle device 502.

The in-vehicle device 502 may not include a communication section. That is, the in-vehicle device 502 may not be connected to the server 501 via the network 504. In this case, data accumulated in the in-vehicle device 502 may be input to the server 501 in off-line (for example, manually or the like via a recording medium).

The server 501 includes an environment map creation unit 511, a map registration unit 512, a movement route and movement direction comparison unit 513, a map acquisition unit 514, and a position and orientation estimation unit 515. The server 501 has in-vehicle data and GNSS information ("in-vehicle data+GNSS information" 521). The server 501 may include the 3D environment map DB 510 as internal processing data.

The in-vehicle data is in-vehicle data on which the position and orientation estimation unit 515 performs position and orientation estimation process by using the 3D environment map 522. Specifically, the in-vehicle data is data on the periphery of the moving object acquired by the apparatus in the moving object, and may be, for example, a moving image of the in-vehicle camera, periphery distance measurement data by an in-vehicle LiDAR apparatus or the like, and the like.

Note that, data input by the environment map creation unit 511 (data for 3D environment map creation) and data used by the movement route and movement direction comparison unit 513 and the position and orientation estimation unit 515 (data for which position and orientation estimation is performed by using the 3D environment map) are described here as in-vehicle data of different scenes of different moving objects, and may be in-vehicle data of the same moving object and the same scene.

The GNSS information is measured position data of the moving object 503, and may be acquired simultaneously with the in-vehicle data. For example, the GNSS information may be GPS information of an ordinary vehicle or position information acquired by another section. Also, not only latitude and longitude value but also a height value such as an altitude may be included.

The environment map creation unit 511 inputs the "in-vehicle data+GNSS information" 521, and creates a 3D (three-dimensional) environment map 522 from the "in-vehicle data+GNSS information" 521.

The map registration unit 512 registers the 3D environment map 522 created by the environment map creation unit 511 in the 3D environment map DB 510. At this time, an index for search may be created. For example, any database item may be held as another table for search. By using the index, it is possible to search the 3D environment map DB 510 at a higher speed.

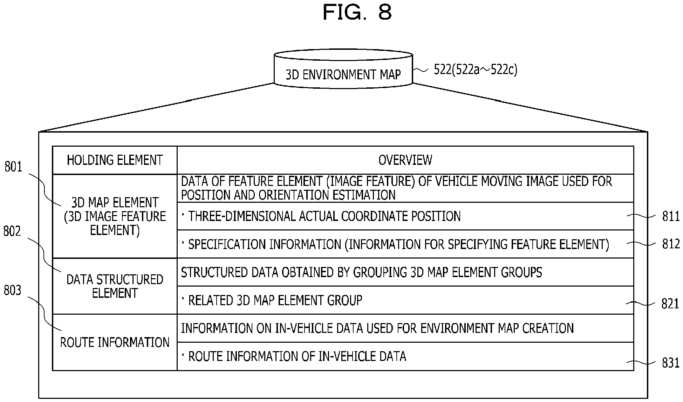

The movement route and movement direction comparison unit 513 compares route information (the route information 803 illustrated in FIG. 8 described below) of a plurality of 3D environment maps 522 including an acquisition position when the moving object 503 or the in-vehicle device 502, which is an example of an acquisition apparatus mounted on the moving object 503, acquires data for 3D environment map creation with route information acquired from the target moving object 503 of which position and orientation is to be calculated or the acquisition apparatus (the in-vehicle device 502) mounted on the target moving object.

Based on the comparison result by the movement route and movement direction comparison unit 513, the map acquisition unit 514 specifies (acquires) a calculation environment map to be used for calculation of an acquisition position and orientation when the target moving object 503 or the acquisition apparatus (the in-vehicle device 502) mounted on the target moving object 503 acquires data, among the plurality of environment maps registered in the 3D environment map DB 510.

Here, the calculation environment map may be a 3D environment map (the map groups 302 to 304 and 307 to 312 illustrated in FIGs. 3 and 4) having the route information similar in at least one of the movement route and the movement direction among the pieces of route information (the traveling route 400 of the in-vehicle data illustrated in FIG. 4) acquired from the target moving object or the acquisition apparatus mounted on the target moving object.

The calculation environment map may be a 3D environment map (the map groups 302 to 304 illustrated in FIGs. 3 and 4) having route information with similar movement routes and movement directions among the pieces of route information (the traveling route 400 of the in-vehicle data) acquired from the target moving object or the acquisition apparatus mounted on the target moving object.

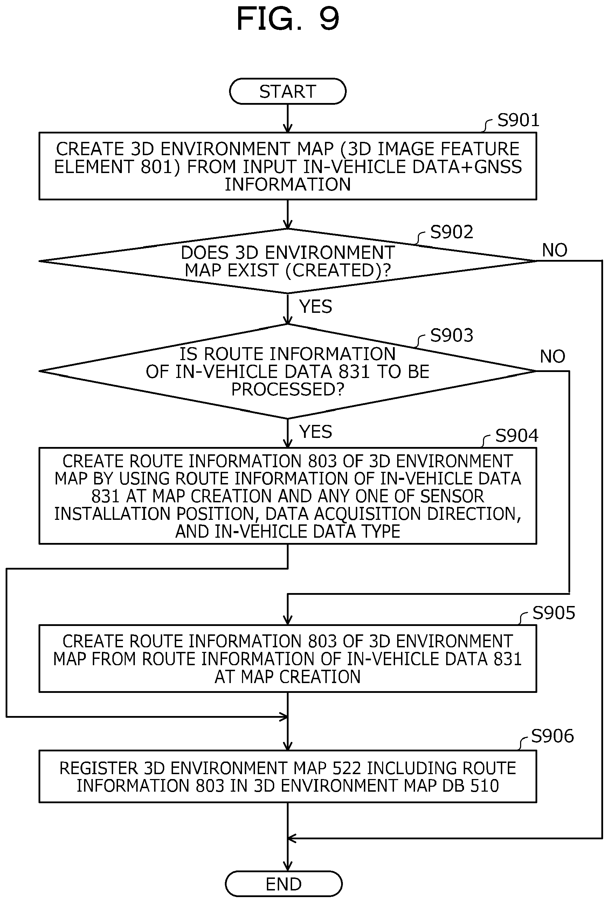

The movement route and movement direction comparison unit 513 and the map acquisition unit 514 may correct the movement route and the movement direction based on at least one of a type of the acquisition apparatus, an installation position of the acquisition apparatus, and an acquisition direction of data acquired by the acquisition apparatus, specifically, various types of information in a case where the acquisition apparatus is an imaging apparatus and the imaging apparatus is a rear camera, as illustrated in a flowchart in FIG. 9 described below.

The movement route and movement direction comparison unit 513 and the map acquisition unit 514 may set a two-dimensional or three-dimensional predetermined shape (for example, a circle, an ellipse, a sphere, an ellipsoid, or the like) having any size centered at each acquisition position of the route information of the environment map or data (the 3D map element 201 illustrated in FIGs. 2 to 4) acquired from the target moving object of which position and orientation is to be calculated or the acquisition apparatus mounted on the target moving object, determine the degree of overlapping of the routes by using shape inside or outside determination of the predetermined shape, and specify the 3D environment map 522 for calculation based on the determination result.

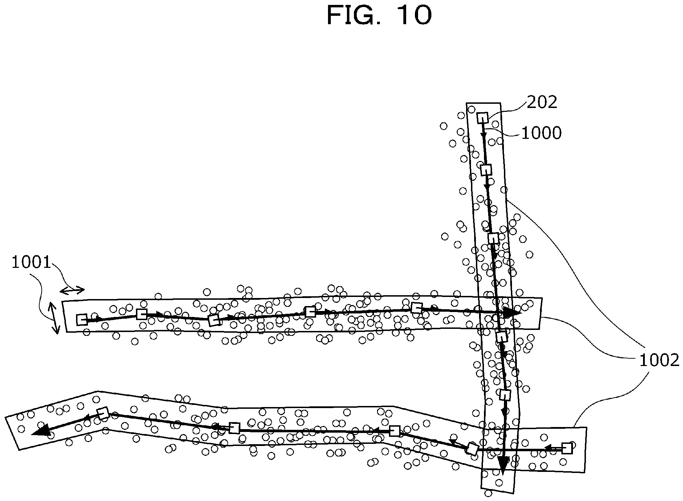

The movement route and movement direction comparison unit 513 and the map acquisition unit 514 may set a two-dimensional or three-dimensional predetermined shape 1002 having any size (a GPS error 1001 in FIG. 10) including a route (an arrow 1000 in FIG. 10 described below) in the route information of the environment map or the route information acquired from the target moving object as the position and orientation calculation target or the acquisition apparatus mounted on the target moving object, determine the degree of overlapping of the routes by using the shape inside or outside determination for the predetermined shape 1002, and specify the calculation environment map based on the determination result.

When the plurality of 3D environment maps 522 for calculation are specified, the movement route and movement direction comparison unit 513 and the map acquisition unit 514 may calculate a use priority of the specified 3D environment map 522 for calculation based on the degree of overlapping of the routes.

The position and orientation estimation unit 515 uses the calculation environment map acquired by the map acquisition unit 514 to calculate an acquisition position and orientation (an "estimation position and orientation" 523) when the target moving object or an acquisition apparatus mounted on the target moving object acquires data.

In FIG. 5, the server 501 is configured to include the environment map creation unit 511, the map registration unit 512, the movement route and movement direction comparison unit 513, the map acquisition unit 514, and the position and orientation estimation unit 515. Although not illustrated, at least one of these respective functional units may be included in the in-vehicle device 502, in addition to the server 501, or instead of the server 501. In a case where the in-vehicle device 502 includes at least one of the respective functional units 511, 512, 513, 514, and 515, the in-vehicle device 502 may have the same contents of the processing executed by the server 501. In addition, the server 501 may include a plurality of servers, and the respective functional units may be distributed and the processing may be performed.

### (Hardware Configuration Example of Server)

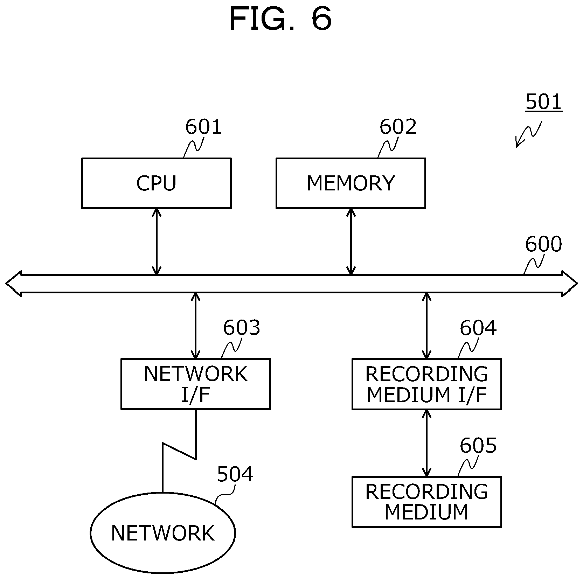

FIG. 6 is a block diagram illustrating an example of a hardware configuration of a server. The server 501 that is an example of an information processing apparatus includes one or more of a central processing unit (CPU) 601, a memory 602, a network interface (I/F) 603, a recording medium I/F 604, and a recording medium 605. The respective components are coupled to each other through a bus 600.

Here, the CPU 601 administrates control of the entire server 501. The memory 602 includes a read-only memory (ROM), a random-access memory (RAM), a flash ROM, and the like. Specifically, the flash ROM or the ROM stores various programs, and the RAM is used as a work area of the CPU 601. The programs stored in the memory 602 are loaded into the CPU 601 and cause the CPU 601 to execute coded processing.

The network I/F 603 is connected to the network 504 through a communication line and is connected to other apparatuses (for example, in-vehicle device 502 and other servers and systems) via the network 504. Then, the network I/F 603 serves as an interface with the network 504 and the inside of the own apparatus and controls input and output of data from and to the other apparatuses. As the network I/F 603, a modem, a LAN adaptor, or the like may be used, for example.

The recording medium I/F 604 controls reading and writing of data from and to the recording medium 605 in accordance with control by the CPU 601. The recording medium 605 stores data written under control by the recording medium I/F 604. As the recording medium 605, a magnetic disk, an optical disc, or the like may be used, for example.

Note that, the server 501 may include, for example, a solid-state drive (SSD), a keyboard, a pointing device, a display, and the like, in addition to the components described above.

### (Hardware Configuration Example of In-vehicle Device)

FIG. 7 is a block diagram illustrating an example of a hardware configuration of an in-vehicle device. The in-vehicle device 502, which is an example of an information collection apparatus, includes a CPU 701, a memory 702, a wireless communication apparatus 703, a moving object I/F 704, a reception apparatus 705, and the imaging apparatus (the distance measurement apparatus) 706. The respective components are coupled to each other through a bus 700.

The CPU 701 administrates control of the entire in-vehicle device 502. The memory 702 includes, for example, a ROM, a RAM, a flash ROM, and the like. Specifically, the flash ROM or the ROM stores various programs, and the RAM is used as a work area of the CPU 701. The programs stored in the memory 702 are loaded into the CPU 701 and cause the CPU 701 to execute coded processing.

The wireless communication apparatus 703 receives transmitted radio waves or transmits the radio waves. The wireless communication apparatus 703 includes a configuration including an antenna and a reception apparatus and is provided with a function of transmitting and receiving communication such as mobile communication (specifically, for example, 3G, 4G, 5G, PHS communication, or the like) according to various communication standards, and Wi-Fi (registered trademark) or the like.

The moving object I/F 704 controls an interface with the moving object 503 and the inside of the own apparatus of the in-vehicle device 502, and controls an input and an output of data from and to the moving object 503. Therefore, the in-vehicle device 502, for example, may collect information from an ECU (including various sensors and the like) 707 included in the moving object 503 via the moving object I/F 704. Specifically, the moving object I/F 704 may be, for example, a coupler to be used when coupled by wire or a near field communication (specifically, a Bluetooth (registered trademark)) apparatus or the like.

The reception apparatus (for example, a GNSS reception apparatus such as a GPS reception apparatus) 705 receives radio waves from a plurality of satellites 505, and calculates the current position on the earth from information included in the received radio waves.

The imaging apparatus (for example, a camera or the like) 706 is a device that captures a still image or a moving image and outputs the captured image as image information. Specifically, for example, the imaging apparatus includes a configuration in which a lens and an imaging element are provided. Specifically, in addition to a video of a monocular camera, image pairs of a plurality of cameras (stereo cameras) and the like are included. In this manner, the imaging apparatus 706 may acquire image information configured with a moving image including a video (a moving image) or a single image (a still image). The imaging apparatus 706 may be a drive recorder or the like mounted on a general passenger vehicle or a commercial vehicle such as a taxi.

A captured image by the imaging apparatus 706 is stored on the memory 702. In addition, the imaging apparatus 706, such as a camera, may have an image recognition function, a bar code or a QR code (registered trademark) reading function, an optical mark reader (OMR) function, an optical character reader (OCR) function, and the like.

The imaging apparatus 706 may be a distance measurement apparatus. The distance measurement apparatus 706 radiates laser light, measures a time taken for the laser light to hit an object and rebound, and measures a distance and a direction to the object. Specifically, the function may be realized by a LiDAR unit or the like.

As illustrated in FIG. 7, the GNSS reception apparatus 705 and the imaging apparatus 706 may be included in the in-vehicle device 502, or may be included in the moving object 503 or separately and externally attached and used. At this time, the data exchange between the GNSS reception apparatus 705 or the imaging apparatus 706 and the in-vehicle device 502 may be performed by wired or wireless communication.

In a case where the GNSS reception apparatus 705 or the imaging apparatus 706 is not provided in the in-vehicle device 502, such information may be acquired via the moving object I/F 704 or the like. In addition, although not illustrated, the in-vehicle device 502 may include various input apparatuses, a display, an interface for reading and writing recording medium such as a memory card, various input terminals, and the like.

### (Contents of 3D Environment Map)

FIG. 8 is an explanatory diagram illustrating an example of a configuration of a 3D environment map according to Embodiment 1. In FIG. 8, the 3D environment map 522 (522a to 522c) includes the 3D map element (3D image feature element) 801, the data structured element 802, and the route information 803.

Although not illustrated, the 3D environment map 522 may include "ID" information that is unique identification information for identifying each element or information for each of the 3D map element 801, the data structured element 802, and the route information 803 of holding data configuration elements. Note that, the data structured element 802 of the 3D environment map 522 is for performing accurate position and orientation estimation, and may be omitted.

The 3D map element 801 is data related to a feature element of in-vehicle data used in the position and orientation estimation (calculation) process. For example, FIG. 8 illustrates a case where in-vehicle data is image information (moving image) as an example of in-vehicle data to be used for specific position and orientation estimation, the feature element is an image feature, and the 3D map element 801 is a 3D image feature. In addition, the 3D map element (3D image feature element) 801 includes a "three-dimensional actual coordinate position" 811 and "specification information (for specifying the feature element)" 812, which are respectively three-dimensional actual coordinate positions of the image feature and specification information for specifying the image feature. As the specific image feature, an image feature point, an image feature line, and the like that may be extracted from an image of the in-vehicle data by any image processing method are considered.

Note that, in a case where LiDAR data is used as the in-vehicle data, the 3D map element 801 is a 3D LiDAR feature element, and as the LiDAR feature element, a three-dimensional points that may be extracted from LiDAR distance measurement data by any analysis processing method using a scanning angle or the like, a plane group (3D mesh group) or a micro solid group (3D voxel group) obtained from the three-dimensional points, and the like are considered.

When the feature element is an image feature, the "three-dimensional actual coordinate position" 811, which is the three-dimensional actual coordinate position of the 3D map element 801, may be calculated by using known triangulation, optimization calculation for a minute position change, or the like, by using a change or the like in data position when the same feature element appears in the in-vehicle data at a plurality of times, in processing such as V-SLAM. When the feature element is a LiDAR feature element, the 3D coordinates of the three-dimensional point group of the LiDAR distance measurement data may be used, or by using a known analysis processing method such as an object recovery method from the LiDAR data, the feature element such as a 3D mesh group which is a 3D plane coupling nearby three-dimensional point group and a 3D voxel group created as a micro-three-dimensional space may be extracted to use a three-dimensional position of the feature element.

The "specification information" 812 is information for specifying a feature element, and is any attribute information when the feature element is extracted. For example, in a case of the image feature, the feature element may be an image feature amount or the like. In a case of the LiDAR, the feature element may be a 3D point group density around each three-dimensional point, a normal vector of each 3D plane (3D mesh), a 3D point group density in each 3D voxel, or the like. Further, when a moving image simultaneously captured in addition to the LiDAR data exists, a pixel color or the like corresponding to the LiDAR three-dimensional point extracted from the moving image may be used. As described above, the feature element may be an attribute element used for comparison and association between the feature elements.

The position and orientation estimation unit 515 compares a position at which the respective 3D map elements 801, of which three-dimensional actual coordinate position 811 in the 3D environment map 522 is known, actually appear in the in-vehicle data (moving image or LiDAR distance measurement result) as a position and orientation estimation target with a position at which the respective 3D map elements 801 will appear in the in-vehicle data that may be geometrically calculated from the position and orientation value being estimated. Then, optimization is performed so as to reduce a difference between the actual position and the position at which each 3D map elements 801 will appear, so that it is possible to estimate an (imaging or distance measurement) position and orientation of the in-vehicle data apparatus (a camera or LiDAR). At this time, it is desirable to specify a comparison target having a feature equal to a feature actually extracted from the in-vehicle data as the position and orientation estimation target from a large number of 3D map elements 801, and the "specification information" 812 may be used for this specification.

In a case where the "specification information" 812 is an image feature amount, the image feature amount may be calculated when an image feature is extracted by a common image process. For example, as the image feature amount, a value obtained by converting a luminance difference condition between a pixel serving as the image feature and a peripheral pixel into a binary value, or the like may be used. Therefore, the image feature amount depends on a type of the image process to be used (a type of image feature to be extracted in the image process). Since it is commonly possible to compare image feature amounts of the same image feature type, it is possible to specify the 3D image feature element 801 having the specification information 812 corresponding to the image feature extracted from the image as the position and orientation estimation target in the 3D environment map 522 by any image feature amount comparison method.

The data structured element 802 aggregates the 3D map elements 801, and may be, for example, a group obtained by grouping the 3D map elements 801. When the 3D environment map 522 is mainly used in the position and orientation estimation unit 515, the data structured element 802 may be used to roughly sort the 3D map element 801 likely to be related to the in-vehicle data as the position and orientation estimation target.

In general, in order to robustly and accurately perform position and orientation estimation (calculation), the 3D environment map 522 holds a large number of 3D map elements 801. Meanwhile, it is inefficient to compare which of a large number of 3D map elements 801 is used for the position and orientation estimation using "specification information (specification information for specifying feature elements)" 812 of the 3D map elements 801. When the number of comparison targets is too many, it is considered that a plurality of 3D map elements having the same specification information 812 exist in the same environment map 522, and there is also a high possibility that an erroneous 3D map element is specified by comparison. On the other hand, by preparing the "data structured element" 802 in which the 3D map elements 801 that may be simultaneously referred to are grouped for each instance of acquiring the in-vehicle data in advance, it is possible to avoid the wrong 3D map element 801 being used.

For example, when a moving image is used as the in-vehicle data, each image used for creating the 3D environment map is set as the data structured element 802. All images in the moving image may be set as the data structured element 802. In particular, only an important image (referred to as a "key frame") with a large change in appearance in the moving image may be set as the data structured element 802. At this time, only those extracted in each image from the 3D map elements (3D image feature elements) 801 are collectively held as a "related 3D map element group" 821 of the data structured element 802 which is the image.

In the same manner, at each time of the LiDAR distance measurement data used for creating the 3D environment map 522, the LiDAR feature elements (three-dimensional point group, 3D mesh group, 3D voxel group, and the like) that may be referred at that time may be grouped and held as the "related 3D map element group" 821.

Alternatively, as the data structured element 802, an object (feature) to which the 3D map element 801 belongs may be captured, and the 3D map elements 801 belonging to the same feature may be held. Whether or not the objects are the same may be determined by grouping objects of which three-dimensional actual coordinate positions 811 are close to each other, by specifying an object region in the in-vehicle data by a recognition section such as any image recognition and determining whether or not the feature element exists in the region, and by determining whether or not pieces of specification information such as a point group density and a normal vector are similar. As described above, when the 3D map elements 801 are grouped in object units, the 3D map elements 801 at similar existing positions are grouped, the 3D map elements 501 that are easily browsed at the same time may be narrowed down to some extent.

Unlike a normal 3D environment map, the 3D environment map 522 according to Embodiment 1 further holds the route information 803. The route information 803 includes the "route information of in-vehicle data" 831 to be used when creating the 3D environment map 522. The "route information of in-vehicle data" 831 may be, for example, GNSS information acquired simultaneously with the in-vehicle data arranged in the order of acquisition. In practice, the "route information of in-vehicle data" 831 may hold a value of the GNSS information as it is, or may hold information from which a noise is removed by interpolation on a measurement failure portion or by using any filter.

The "route information of in-vehicle data" 831 may be processed into position information in accordance with the data structured element 802. For example, when the data structured element 802 is an image key frame, an acquisition interval is different between a normal GPS measurement sensor (commonly 1 Hz) and a video (for example, 30 fps, that is, corresponding to 30 Hz), so that the GNSS information may be processed into position information corresponding to an acquisition time of the image key frame and may be held.

The "route information of in-vehicle data" 831 may hold each position (actual coordinate position) of a route and a passing order of the route or a passing time at each position. Here, the passing time may not be an absolute time but may be a relative time from a start of the acquisition of the in-vehicle data. Traveling direction information at each position may be easily obtained by obtaining a direction (vector) toward the next position (position at the next time) of each position by using the passing order or the passing time. In addition, the "route information of in-vehicle data" 831 may hold the traveling direction information at each position of the route instead of or in addition to the position (actual coordinate position) of the route and the passing order (the passing time at each position).

Further, when an installation position of an acquisition sensor for the in-vehicle data in the moving object is known as the "route information of in-vehicle data" 831, route information of the GNSS processed by the installation position may be used. For example, a position of the route information by the GNSS information may be a position obtained by adding a position difference of "installation position of GNSS apparatus in moving object" - "installation position of in-vehicle data acquisition apparatus in moving object". Thus, the route may be set to a route more accurately corresponding to the in-vehicle data.

When information on which direction of the in-vehicle data acquisition sensor is mounted to acquire a condition outside the moving object is known as the "route information of in-vehicle data" 831, route information of GNSS processed by the information may be used. For example, when the in-vehicle data is data acquired by a camera directed in a direction opposite to the traveling direction of the moving object by 180 degrees, that is, a rear camera that captures an image of the rear of the moving object, a direction in which the movement direction obtained from the route information of the GNSS is directed in a direction opposite by 180 degrees may be set as the movement direction of the "route information of in-vehicle data" 831.

As described above, when a correction process is performed so as to be a data acquisition direction (such as the imaging direction) of the acquisition apparatus, the movement direction is not strictly the movement direction, but for simplicity, the movement direction is assumed to be the movement direction in both cases thereafter.

Note that, when the installation position and the acquisition direction are specified in advance from a type of the in-vehicle data acquisition apparatus (sensor) such as the rear camera or the front camera, the sensor type may be acquired together with the in-vehicle data, and the position and the movement direction of the "route information of in-vehicle data" 831 may be automatically processed and corrected.

The "route information of in-vehicle data" 831 may hold a value obtained by actually processing the position or the movement direction, with the position or the acquisition direction of the acquisition sensor of the in-vehicle data. In addition, the "route information of in-vehicle data" 831 may hold data to be processed, and may process and use a value when the route position or the movement direction is desirable.

Note that, when the 3D environment map 522 is created by using SLAM, position and orientation estimation of each time data (each image in a case of a moving image) of the in-vehicle data and the 3D environment map creation are executed at the same time, so that the GNSS information to be used at the time of creation or information obtained by processing the GNSS information may not be set as the "route information of in-vehicle data" 831, and the position and orientation of the in-vehicle device simultaneously estimated at the time of creating the 3D environment map may be held as a position and traveling direction (movement direction) of the "route information of in-vehicle data" 831.

By using the position and orientation values of the estimation position and orientation, it is possible to reduce the execution of processing in consideration of the GNSS information having the sparse acquisition interval and the acquisition interval of the in-vehicle data, and it is possible to hold and manage accurate route information with higher accuracy than the route information by the GNSS.

Further, the 3D environment map 522 may further hold, as other information, information at the time of the acquisition of the in-vehicle data at the time of creation, for example, information such as an acquisition date and an acquisition time of the in-vehicle data, a type of the acquired vehicle, and the like, in addition to the "route information of in-vehicle data" 831.

### (Contents of Environment Map Creation Unit 511)

The environment map creation unit 511 illustrated in FIG. 5 creates the 3D environment map 522 to be used in the position and orientation estimation unit 515 by any known method using the "in-vehicle data+GNSS information" 521 as an input. For example, when in-vehicle data is LiDAR data, a distance of LiDAR information from a distance measurement apparatus, that is, a distance measurement point group for which a relative three-dimensional position (3D position) from the distance measurement sensor is known, may be set as a LiDAR feature element. Alternatively, by using an analysis processing method such as a known object recovery method from data of the point group having a relative three-dimensional position by distance measurement, a 3D mesh group which is a 3D plane linking vicinity point group, a 3D voxel group which extracts a micro three-dimensional space in which a point group exists, or the like may be set as the LiDAR feature element.

3D positions of these LiDAR feature elements may be further accurate 3D positions by performing time series analysis such as SLAM using LiDAR data (the LiDAR feature elements). These 3D positions may be converted and calculated into latitude and longitude values in the actual coordinate system by GNSS data to be the 3D environment map 511.

When the in-vehicle data is moving image data, V-SLAM using the moving image may be executed to obtain a 3D position of the image feature element, and the 3D position may be converted and calculated from a relative position to a latitude and longitude value in the actual coordinate system by GNSS information to form the 3D environment map 522.

At this time, the conversion into the actual coordinate system may be executed simultaneously with the 3D position calculation, or the feature element of the LiDAR information or the 3D position of the image feature of the moving image may be held as a relative value, and a conversion method into the actual coordinate system, for example, a value or the like of a coordinate system conversion matrix, may be separately held.

In order to obtain a position and orientation in the position and orientation estimation unit 515 by using the 3D environment map 522 created in the environment map creation unit 511, the feature elements having 3D positions (3D map elements (3D image feature elements) 801 of the 3D environment map 522) used in the environment map creation unit 511 and the position and orientation estimation unit 515 is commonly desirable to be the same.

The environment map creation unit 511 creates new route information 803, in addition to the 3D environment map in the related art (the 3D map element 801 and the data structured element 802 in FIG. 8). Note that, the route information 803 is calculated by the environment map creation unit 511 for the sake of convenience, and may be calculated subsequently when the 3D environment map 522 is registered in the map registration unit 512.

Specifically, for example, in the server 501 illustrated in FIG. 5, the environment map creation unit 511 may realize the function by the CPU 601 executing the program stored in the memory 602. Also, specifically, in the in-vehicle device 502 illustrated in FIG. 7, the function may be realized by the CPU 701 executing the program stored in the memory 702, for example.

### (Contents of Map Registration Unit 512)

The map registration unit 512 registers and manages the 3D environment map 522 including the 3D map element 801, the data structured element 802, and the route information 803 (note that, the data structured element 802 may be omitted) created in the environment map creation unit 511 in the 3D environment map DB 510 or the like so that the 3D environment maps 522 are compared and specified by the movement route and movement direction comparison unit 513, and easily quoted by the position and orientation estimation unit 515.

For this reason, as described above, another table dedicated for search may be created by using elements related to search in the 3D environment map DB 510. Thus, a search speed is improved, and when the 3D environment map is registered in advance in the 3D environment map DB 510, index information or spatial index information for search using some of the pieces of route information 803 may be prepared in advance as a search index by using a normal known index or spatial index information creation section of a database. In this manner, it is possible to speed up the comparison by the movement route and movement direction comparison unit 513.

Specifically, in the server 501 illustrated in FIG. 6, the map registration unit 512 may realize the function by the CPU 601 executing the program stored in the memory 602 or by the network I/F 603, the recording medium I/F 604, or the like, for example. Specifically, in the in-vehicle device 502 illustrated in FIG. 7, the function may be realized by the CPU 701 executing the program stored in the memory 702 or by the wireless communication apparatus 703 or the like, for example.

### (Processing Procedure of Environment Map Creation Unit 511 and Map Registration Unit 512)

FIG. 9 is a flowchart illustrating an example of processing of an environment map creation unit and a map registration unit according to Embodiment 1. In the flowchart in FIG. 9, the 3D environment map 522, more specifically, the 3D image feature 801 of the 3D environment map 522 is created from input in-vehicle data and GNSS information (step S901).

Then, it is determined whether or not the 3D environment map 522 (the 3D image feature 801) is created (step S902). Here, when the 3D environment map 522 (3D image feature 801) may not be created and does not exist (No in step S902), a series of processes is ended without doing anything.

On the other hand, when the 3D environment map 522 (the 3D image feature 801) is created (Yes in step S902), next, it is determined whether or not any one of an in-vehicle data sensor installation position, a data acquisition direction, and an in-vehicle data type is known at a time of the map creation, and the route information of in-vehicle data 831 is to be processed (step S903).

Here, when any one of the in-vehicle data sensor installation position, the data acquisition direction, and the in-vehicle data type at the time of the map creation is known and the route information of in-vehicle data 831 is to be processed (Yes in step S903), the route information 803 of the 3D environment map 522 is created by using the route information of in-vehicle data 831 at the time of the map creation and any one of the in-vehicle data sensor installation position, the data acquisition direction, and the in-vehicle data type (step S904). Thereafter, the procedure proceeds to step S906.

On the other hand, when any one of the in-vehicle data sensor installation position, the data acquisition direction, and the in-vehicle data type at the time of the map creation is not known, or the route information of in-vehicle data 831 is not desirable to be processed (No in step S903), the route information 803 of the 3D environment map 522 is created, from the route information of in-vehicle data 831 at the time of the map creation (step S905). Thereafter, the procedure proceeds to step S906. The processing up to this point (each process in steps S901 to S905) may be performed, for example, by the environment map creation unit 511.

Thereafter, the 3D environment map 522 including the route information 803 is registered in the 3D environment map DB 510 (step S906). Thus, a series of processes is ended. The processing in step S906 may be performed, for example, by the map registration unit 512.

With the procedure of each process of steps S901 to S906, the 3D environment map 522 may be created from the in-vehicle data and the GNSS information (the "in-vehicle data+GNSS information" 521), and the created 3D environment map 522 may be registered in the 3D environment map DB 510.

### (Contents of Movement Route and Movement Direction Comparison Unit 513)

The movement route and movement direction comparison unit 513 inputs in-vehicle data for which a position and orientation is desired to be estimated and GNSS information (the "in-vehicle data+GNSS information" 521), which is positioning information such as GPS, acquired simultaneously with the in-vehicle data, and specifies a 3D environment map group related to the in-vehicle data from the 3D environment map DB 510 registered by the map registration unit 512. At this time, the GNSS information of the in-vehicle data desired to be estimated may also be processed so that the route information 803 of the 3D environment map 522 is corrected and processed from an installation position, an acquisition direction, a sensor type, and the like of an in-vehicle data sensor.

Specifically, the movement route and movement direction comparison unit 513 may realize the function by the CPU 601 executing the program stored in the memory 602 in the server 501 illustrated in FIG. 5, for example. Specifically, in the in-vehicle device 502 illustrated in FIG. 7, the function may be realized by the CPU 701 executing the program stored in the memory 702, for example.

Specifically, the movement route and movement direction comparison unit 513 may specify (narrow down) a 3D environment map group related to the in-vehicle data by the following procedure.

First, the movement route and movement direction comparison unit 513 selects, from the 3D environment maps 522 in the 3D environment map DB 510, the 3D environment map 522 in which each position of the traveling route 400 of the in-vehicle data is close to a position of a route of relevant information of the 3D environment map. For example, it may be determined whether or not each of 3D position points constituting the 2 routes overlaps with the other point.

At this time, it is assumed that a position error due to a measurement apparatus exists in the actual coordinate 3D position of the traveling route 400 of the in-vehicle data or the route of the relevant information of the 3D environment map 522. Then, by considering a circle or an ellipse having a radius corresponding to the assumed position error centered on the 3D position points constituting each, it may be determined whether or not the circles overlap with each other.

Alternatively, assuming that only one route is formed by a point (or circle in consideration of error) at the 3D position and the other route is formed by a polygonal line (or shape surrounding thick line = line having width in consideration of error), the overlap determination may be performed between the point (or the circle) and the polygonal line (or the shape).

FIG. 10 is an explanatory diagram illustrating an example in which route information of a map is represented as a shape. In FIG. 10, when overlap comparison is performed, a shape having a thickness is used for a position polygonal line of a traveling route of the "route information of in-vehicle data" 831 of the 3D environment map 522. Specifically, the thickness may be given in consideration of the GPS error 1001. The " 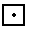 " 202 and an arrow 1000 extending from the " 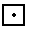 " 202 indicate a route position and a traveling direction of the "route information of in-vehicle data" 831.

When a GNSS (GPS) route of the in-vehicle data for which a position and orientation is desired to be estimated is within this shape region, it is determined to use this 3D environment map. Further, it is determined whether an imaging direction at each route position in the map coincides with a route direction by the GNSS. For example, in a case of a map of an opposite lane, the direction is a reverse direction. In addition, although not illustrated, conversely, the GNSS (GPS) route of the in-vehicle data for which the position and orientation is desired to be estimated may be regarded as a thick shape in consideration of the error 1001, and may be compared with a map traveling trajectory polygonal line. In this manner, the overlap may be determined by using a thick line (the predetermined shape 1002 surrounding the line) having a width in consideration of the error.

At this time, for example, not only whether or not the routes overlap each other but also how many routes overlap each other may be calculated. Here, in a case of the determination of the points (the circles), a ratio of the point group determined to overlap with point group of the other route to all the points constituting both the routes may be checked to determine an overlapping ratio. In the present Embodiment 1, the determination of the circles that makes it possible to easily calculate the overlapping ratio of both the routes is executed. In addition, in a case of the determination of the point (the circle) and the polygonal line (the shape), in the same manner, a ratio of overlapping point group to all the points may be obtained, and the overlapping ratio may be set.

In this manner, in the position and orientation estimation target route, it is possible to obtain the overlapping ratio for each 3D environment map, and at the same time, it is also possible to obtain the overlapping ratio with the position and orientation estimation target route in each 3D environment map. Note that, the overlap determination calculation methods using the points, circles, polygonal lines, and shapes of the routes are examples, and the overlap may be obtained by another method other than these methods.

With the calculated overlapping ratio, the movement route and movement direction comparison unit 513 may exclude a 3D environment map having no overlapping ratio for a position and orientation target route, from the 3D environment map group as use target candidates ("step S1"). In FIG. 4, as a result of performing the overlap determination, a map group of the 5 3D environment maps (the 3D environment map 301, 305, 306, 310, and 311) among the 12 3D environment maps does not overlap with the position and orientation target route, and thus are deleted from the candidates for the 3D environment map for calculation.

Next, the movement route and movement direction comparison unit 513 performs determination related to a traveling direction on the map group of the 7 3D environment maps (302 to 304, 307 to 309, and 312) remaining as the use target candidates, that is, determines whether or not the traveling direction is a similar traveling direction at a route position determined to be overlapped ("step S2").

Specifically, traveling direction information of the route information 803 of the 3D environment map is compared with the traveling direction of the position and orientation estimation target route. For example, directions of respective vectors of the respective routes are compared with each other, an inner product of the vector or an angle formed by the vectors are obtained, and a 3D environment map having a direction apparently opposite to or orthogonal to the traveling direction of the position and orientation estimation target route is excluded. Thus, it is possible to exclude the 3D environment map related to the route that may be determined as an opposite lane or a cross road, and the 3D environment map created from in-vehicle data, in which a data acquisition direction of the in-vehicle data is an opposite direction, seen to be significantly different. Note that, this exclusion method is an example, and in a case where the 3D environment map may be created as one map in the upper and lower lanes, the map of the opposite lane of which directions are close to the opposite may not be excluded.

In FIG. 4, as a result of performing the overlap determination, a traveling direction of a map group of the 4 3D environment maps (the 3D environment maps 307, 308, 309, and 312) among the 12 3D environment maps is opposite or nearly orthogonal to the position and orientation target route, and thus are deleted from the candidates for the 3D environment map for calculation. As a result, a map group of the remaining three 3D environment maps (302, 303, and 304) is selected by the movement route and movement direction comparison unit 513.

As described above, the movement route and movement direction comparison unit 513 determines a similarity between the routes based on the position and the traveling direction of the route, and narrows down the 3D environment maps to be used. Note that, the movement route and movement direction comparison unit 513 may further exclude a map having a low route overlapping ratio in the remaining 3D environment map group. Alternatively, a priority to be used by the position and orientation estimation unit 515 may be determined so that a map having a lower route overlapping ratio has a lower priority than the other 3D environment maps.

It is considered that the 3D environment map with the low overlapping ratio of the 3D environment map with respect to the position and orientation estimation target route has a small portion which is actually usable in the position and orientation estimation unit 515. Therefore, even when the position and orientation estimation process is executed by reading and deploying the 3D environment map, the position and orientation may not be immediately estimated. As described above, since there are few route portions that may be estimated for a preparation cost (deployment memory amount, reading and deployment processing cost, and the like) for executing the position and orientation estimation process, in a case where there are other 3D environment maps, giving a use priority to the 3D environment map may increase efficiency of the position and orientation estimation process. Also, it is possible to shorten a time for which position and orientation estimation may be completed for the entire route as the position and orientation estimation target.

Note that, even for a map having a low overlapping ratio, when the map acquisition unit 514 may specify and acquire only the overlapping portion, instead of acquiring the entire 3D environment map 522 (whole), the map acquisition and reading deployment cost are low, so that the map may not be excluded or the priority may not be lowered. In addition, in a case where there is only the map having the low overlapping ratio, it may be determined that the 3D environment map to be used for the position and orientation estimation process is not found, and the position and orientation estimation process may be abandoned.

The movement route and movement direction comparison unit 513 may select (sort) the 3D environment map 522 not only by comparing the position and orientation estimation target route with the route information 803 related to the 3D environment map 522 but also by an acquisition date, an acquisition time, an acquisition vehicle type, and the like of the in-vehicle data of the position and orientation estimation target as in the search method in the related art. As the date and the time of the 3D environment map are closer to the position and orientation estimation target route, the 3D environment map is created from in-vehicle data acquired in a scene more similar to the in-vehicle data as the position and orientation estimation target, so that a scene change is small. Therefore, there is a high possibility that the position and orientation estimation process by the position and orientation estimation unit 515 may be reliably executed. This selection may be executed at any timing before, after, or during the determination in the route position or the traveling direction.

When executing determination of the position of the route, the movement route and movement direction comparison unit 513 may determine a height in the 3D environment map 522. In a case of determination using a latitude and longitude without consideration of height, for example, determination using a two-dimensional point, a circle, a polygonal line, a shape, or the like may be performed as determination of the degree of overlapping of the routes. On the other hand, in a case where the determination including the height is performed, for example, as the determination of the degree of overlapping of the routes, it is possible to perform the determination by a three-dimensional point, a sphere, a three-dimensional polygonal line, a three-dimensional shape, or the like.

After the two-dimensional determination is executed, any height threshold value obtained from the height of the position and orientation estimation target route, for example, a minimum value or a maximum value of the height may be compared with each 3D environment map 522, and only a route (for example, a route having only a route position with a height equal to or higher than the minimum value of the height and equal to or lower than the maximum value of the height) in the 3D environment map 522 that matches the height threshold value may be determined as a route having a similar (overlapping) position.

When height information is included in the GNSS information acquired simultaneously with the in-vehicle data, an altitude value is included in the 3D environment map 522 or the height of the position and orientation estimation target route, and by determining the height, it is possible to select the 3D environment map 522 in which an elevated road or a road under elevated road is distinguished.

Further, before the selection process on the 3D environment map 522 based on the position and the traveling direction of the route described above, the movement route and movement direction comparison unit 513 may perform selection using a regional mesh in the same manner as in the related art. By excluding a 3D environment map having a regional mesh with an apparently different region in advance, it is possible to omit calculation of the degree of overlapping or the like for the undesirable 3D environment maps.

As described above, in the map registration unit 512, in order to increase a speed of the formal selection in the movement route and movement direction comparison unit 513, these 3D environment maps DB 510 may be specified by using index information and spatial index information of the 3D environment map 522, generated in the same manner as the increase in a speed of a spatial query of a normal spatial database.

Note that, in order to increase the speed of the formal selection by the movement route and movement direction comparison unit 513, an index related to the data structured element 802 of the 3D environment map DB 510 may be used in the same manner as in a case of increasing a speed of a query of a normal database. In many cases, a search speed may be improved by creating a separate table dedicated for the search using elements related to the search in the DB, so that index information for the search using the acquisition position of the in-vehicle data may be prepared in advance by using a creation unit for normal known index information of the DB. The index may be created, for example, by the map registration unit 512 as described above. Thus, it is possible to further speed up the comparison process by the movement route and movement direction comparison unit 513.

### (Contents of Map Acquisition Unit 514)

The map acquisition unit 514 actually specifies and acquires map data from the 3D environment map DB 510 for the 3D environment maps 522 selected by the movement route and movement direction comparison unit 513. Note that, the movement route and movement direction comparison unit 513 may specify the map data, and the map acquisition unit 514 may only acquire the specified map data. That is, the map data may be specified by either the movement route and movement direction comparison unit 513 or the map acquisition unit 514.

Unlike the method in the related art, the data acquisition target is limited to the 3D environment map 522 created from the in-vehicle data which is traveling data in the same ascending and descending directions on the same road as the route as the position and orientation estimation target through the image feature comparison process of the movement route and movement direction comparison unit 513, instead of the 3D environment map selected only by the latitude and longitude, so that the 3D environment map 522 may be acquired at a lower cost than the method in the related art.

When the plurality of 3D environment maps 522 are acquired, or the like, a priority determined from an overlapping state or the like calculated by the movement route and movement direction comparison unit 513, and a map of which a part of the route overlaps with the position and orientation estimation target may be held together with the acquired map data. Then, the position and orientation estimation unit 515 may perform position and orientation estimation process with higher accuracy by performing calculation based on the acquired priority or using the map group in which the degree of overlapping may cover the entire route.

Specifically, for example, in the server 501 illustrated in FIG. 6, the map acquisition unit 514 may realize the function by the CPU 601 executing the program stored in the memory 602 or by the network I/F 603, the recording medium I/F 604, or the like. Specifically, in the in-vehicle device 502 illustrated in FIG. 7, the function may be realized by the CPU 701 executing the program stored in the memory 702 or by the wireless communication apparatus 703 or the like, for example.

### (Contents of Position and Orientation Estimation Unit 515)

The position and orientation estimation unit 515 uses data of the 3D environment map 522 acquired by the map acquisition unit 514 and data of "in-vehicle data+GNSS information" 521 that is the position and orientation estimation target to estimate a position and orientation of the in-vehicle data acquisition sensor (the in-vehicle device 502) and the moving object 503 by the method in the related art, for example, SLAM or the like. Specifically, the position and orientation may be estimated by using the calculation method such as SLAM by reading and deploying the selected and acquired data of the 3D environment map 522 into the memory, and comparing the data with in-vehicle data read and deployed into the memory in the same manner.

when there are a plurality of selected maps, unlike the method in the related art in which there is no material to be examined which one is to be used, the priority determined from the overlapping state or the like by the movement route and movement direction comparison unit 513 is provided, so that by performing the position and orientation estimation process in descending order of priority, the possibility that the position and orientation estimation for the position and orientation estimation target may be completed by one execution of the position and orientation estimation process is increased. The position and orientation estimation process is performed by further selecting a map that covers the overlap for all 3D positions of the position and orientation estimation target route with as few maps as possible, and the remaining maps are used only when the position and orientation estimation fails, so that the position and orientation estimation (calculation) at a low processing cost with the minimum number of maps may be realized.

When the position and orientation estimation (calculation) is performed on a plurality of maps in the order of priority, and the position and orientation estimation succeeds, the position and orientation estimation using another map may not be performed. On the other hand, the position and orientation estimation results of all the plurality of maps may be calculated and compared to obtain a final position and orientation estimation result.

For example, the position and orientation estimation results of the respective maps may be compared, and a result of one of the maps, for example, a map having the largest number of pieces of in-vehicle data for which the position and orientation may be estimated (the number of times) may be set as the final result. The position and orientation estimation may be reliably performed with higher accuracy by performing a statistical process, for example, averaging the position and orientation estimation results of each in-vehicle data (each time) in the plurality of maps to obtain the final result. At this time, the statistical process in which results of maps with higher priorities are emphasized and reflected may be performed by using the priorities as weights.

As a loop process of all the selected 3D environment maps 522, the processing of the map acquisition unit 514 and the processing of the position and orientation estimation unit 515 may be collectively executed for one map at a time. In this case, a map acquisition cost of the 3D environment map 522 may be reduced to a low cost.

Specifically, in the server 501 illustrated in FIG. 6, the position and orientation estimation unit 515 may realize the function by the CPU 601 executing the program stored in the memory 602. In addition, specifically, in the in-vehicle device 502 illustrated in FIG. 7, the function may be realized by the CPU 701 executing the program stored in the memory 702, for example.

### (Processing Procedure of Movement Route and Movement Direction Comparison Unit 513, Map Acquisition Unit 514, Position and Orientation Estimation Unit 515)

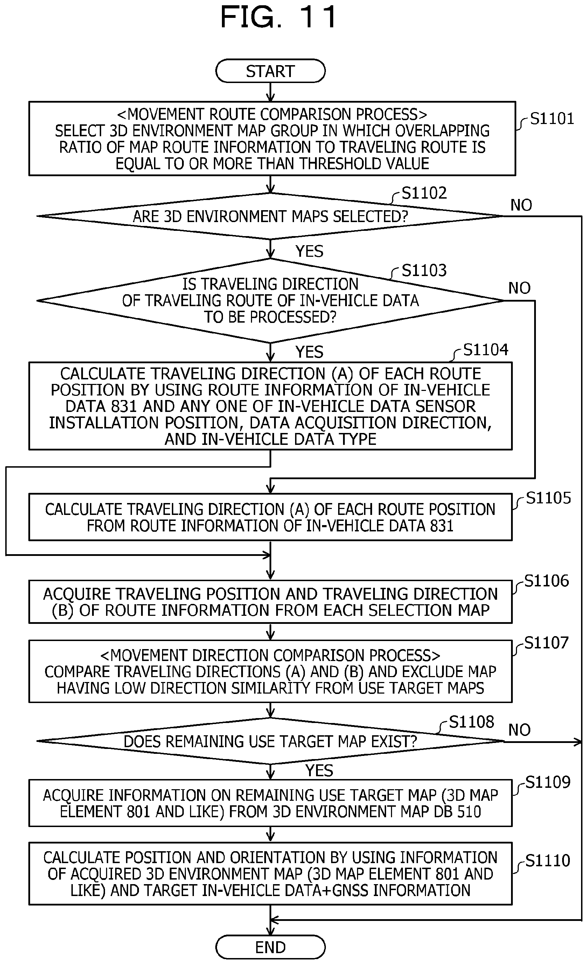

FIG. 11 is a flowchart illustrating an example of processing of a movement route and movement direction comparison unit, a map acquisition unit, and a position and orientation estimation unit according to Embodiment 1. In the flowchart in FIG. 11, in a movement route comparison process, that is, in the 3D environment map DB 510, route information in in-vehicle data of each map is compared with GNSS information (GPS) that is a traveling route of a position and orientation estimation target, an overlapping ratio between the map route information and the traveling route is calculated, and the 3D environment map group in which the overlapping ratio is equal to or more than a threshold value are selected (step S1101).

Then, the 3D environment map may be selected, and it is determined whether or not the selected 3D environment map exists (step S1102). Here, when the 3D environment map may not be selected or there is no selected 3D environment map (No in step S1102), a series of processes is ended without doing anything.

On the other hand, when the 3D environment map may be selected, and the selected 3D environment map exists (Yes in step S1102), any one of an in-vehicle data sensor installation position, a data acquisition direction, and an in-vehicle data type of the in-vehicle data of the position and orientation estimation target is known, and it is determined whether or not a traveling direction of the traveling route of the in-vehicle data is to be processed (step S1103).

Here, in a case where any one of the in-vehicle data sensor installation position, the data acquisition direction, and the in-vehicle data type of the in-vehicle data of the position and orientation estimation target is known, and the traveling direction of the traveling route of the in-vehicle data is to be processed (Yes in step S1103), a traveling direction (A) of each route position is calculated by using the traveling route of the in-vehicle data and any one of the in-vehicle data sensor installation position, the data acquisition direction, and the in-vehicle data type (step S1104). Thereafter, the procedure proceeds to step S1106.

On the other hand, when any one of the in-vehicle data sensor installation position, the data acquisition direction, and the in-vehicle data type of the in-vehicle data for which the position and orientation is to be estimated is not known, and the traveling direction of the traveling route of the in-vehicle data is not desirable to be processed (No in step S1103), the traveling direction (A) of each route position is calculated from the traveling route of the in-vehicle data (step S1105). Thereafter, the procedure proceeds to step S1106.

Next, a traveling position and a traveling direction (B) of the route information are acquired from each selection map (step S1106). Then, in the movement direction comparison process, that is, in each selection map, a route position closest to each route position of the estimation target data is searched, the traveling direction (B) at the position and the traveling direction (A) at the route position of the estimation target data are compared, and when a ratio of the comparison result in which a direction similarity is low (a different direction) to the total number of compare maps is equal to or more than a threshold value, the map is excluded from the use target maps (step S1107). Thereafter, the procedure proceeds to step S1108. The processing up to this point (each process in steps S1101 to S1107) may be performed, for example, by the movement route and movement direction comparison unit 513.

Next, it is determined whether or not any use target map remains (there is a use target map) (step S1108). Here, when the use target map does not remain (No in step S1108), a series of processes is ended. On the other hand, when the use target map remains (Yes step S1108), information of the remaining use target map (such as the 3D map element 801) is acquired from the 3D environment map DB 510 (step S1109). Thereafter, the procedure proceeds to step S1110. These processes (each process of step S1108 and S1109) may be performed, for example, by the map acquisition unit 514.

After that, the position and orientation estimation process on an estimation target image is executed by using the acquired DB information (such as the 3D map element 801) of the 3D environment map 522, the target in-vehicle data, and the GNSS information (step S1110). The processing in step S1110 may be performed, for example, by the position and orientation estimation unit 515.

As described above, according to Embodiment 1, as a 3D environment map related to in-vehicle data for which position and orientation estimation is desired, it is possible to specify the 3D environment map 522 created from the in-vehicle data traveling on the same road in the same direction with priority without using other information such as road network information. Therefore, it is possible to reduce a data acquisition cost of the undesirable 3D environment map and the position and orientation estimation process execution cost without requiring a creation management cost of another database or the like, to shorten a time until the position and orientation estimation is completed, and to perform the position and orientation estimation in real-time.

It is possible to search for only the map created with the in-vehicle data traveling in a direction similar to the traveling direction on the route similar to the traveling route of the in-vehicle data for which the position and orientation is desired to be estimated, instead of the map for each regional mesh, with pinpoint accuracy without requiring creation and management or the like of other databases.

Therefore, in the related art, it is not known which 3D environment map is correct among a large number of 3D environment map group including irrelevant roads such as neighboring roads, intersections, alleyways, and opposite lane roads in the same regional mesh, and the processing of "selecting one from a large number of 3D environment map group and executing position and orientation estimation of a vehicle, in which the target image is captured, by using the selected 3D environment map" is repeated many times until position and orientation estimation may be performed. Meanwhile, by using the position and orientation calculation method according to Embodiment 1, it is possible to search for the correct 3D environment map with pinpoint accuracy and to obtain position and orientation estimation results at high speed.

### (Embodiment 2)

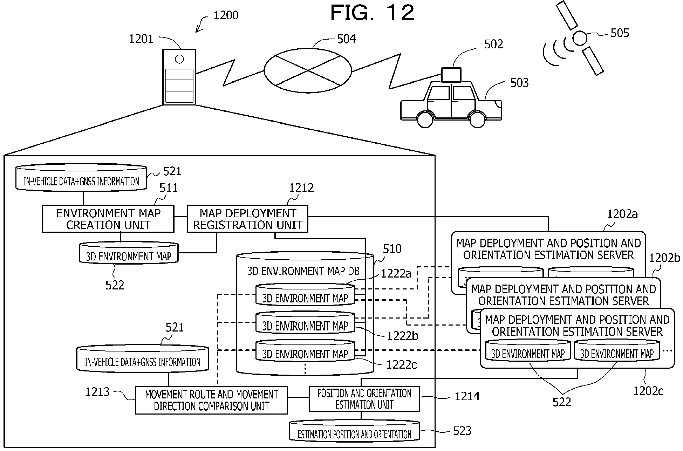

Next, Embodiment 2 will be described. In Embodiment 1, every time the position and orientation estimation process is performed, the position and orientation estimation unit 515 reads the selected and acquired 3D environment map 522, deploys the read 3D environment map into the memory, and performs the position and orientation estimation process by the calculation method such as SLAM. On the other hand, in Embodiment 2, as illustrated in FIG. 12, a map deployment and position and orientation estimation server 1202 (1202a, 1202b, 1202c, ...) is prepared that stores the 3D environment map 522 that is deployed into the memory in advance.

Since the 3D environment map originally has a large data amount, it is difficult to execute the position and orientation estimation process in real-time when the 3D environment map is read and deployed every time the position and orientation estimation process is performed. Therefore, in Embodiment 2, the map deployment and position and orientation estimation server 1202 in which a 3D environment map is deployed in advance is prepared, instead of specifying, reading, and deploying the 3D environment map, every time in-vehicle data as a position and orientation estimation target and GNSS information are input.

Then, when specifying the 3D environment map, the map deployment and position and orientation estimation server 1202 in which the corresponding 3D map is deployed in advance is specified, and information desirable for the position and orientation estimation process is acquired by using the map deployment and position and orientation estimation server 1202. Thus, it is possible to execute the position and orientation estimation process without performing the process of acquiring the 3D environment map and then reading and deploying the 3D environment map in the server. In this manner, the position and orientation estimation may be realized in real-time.

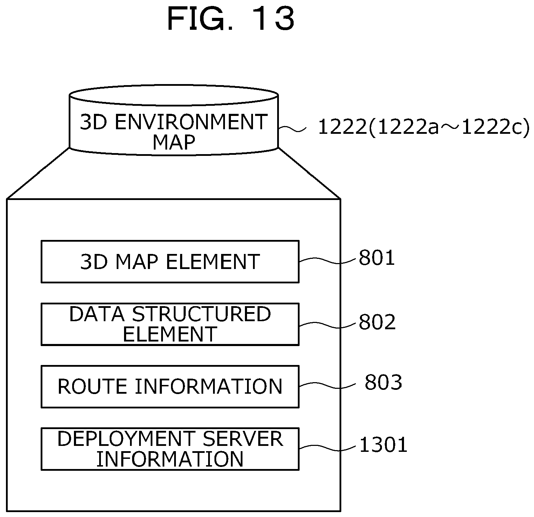

FIG. 12 is an explanatory diagram illustrating an example of a system configuration for implementing a position and orientation calculation method according to Embodiment 2. FIG. 13 is an explanatory diagram illustrating an example of a configuration of a 3D environment map according to Embodiment 2. In FIG. 12, a moving object position and orientation calculation system 1200 that realizes the position and orientation calculation method according to Embodiment 2 includes a server 1201 and the in-vehicle device 502 mounted on the moving object 503.

Note that, in the moving object position and orientation calculation system 1200 that implements the position and orientation calculation method according to Embodiment 2 illustrated in FIG. 12, the same components as those of the moving object position and orientation calculation system 500 that implements the position and orientation calculation method according to Embodiment 1 illustrated in FIG. 5 are denoted by the same reference numerals, and detailed description thereof will be omitted. In the same manner, in a 3D environment map 1222 according to Embodiment 2 illustrated in FIG. 13, the same components as those of the 3D environment map 522 illustrated in FIG. 8 are denoted by the same reference numerals, and the detailed description thereof will be omitted.

A map deployment registration unit 1212 registers the 3D environment map 522 created by the environment map creation unit 511 in the 3D environment map DB 510, reads and deploys the 3D environment map 522 into any processing server (the map deployment and position and orientation estimation server 1202 (1202a to 1202c)), and holds information (deployment server information 1301 illustrated in FIG. 13) of the map deployment and position and orientation estimation server 1202 in the 3D environment map DB 510.

In FIG. 13, in the same manner as the 3D environment map 522 (1222a to 1222c) illustrated in FIG. 8, the 3D environment map 1222 (522a to 522c) holds respective elements of the 3D map element (3D image feature) 801, the data structured element 802, and the route information 803. Contents of these respective elements of the 3D environment map 1222 are the same as the contents of the respective elements of the 3D environment map 522. The 3D environment map 1222 (1222a to 1222c) includes the deployment server information 1301 in addition to the respective elements of the 3D map element 801, the data structured element 802, and the route information 803.

In this manner, a plurality of 3D environment maps may be deployed into the memory in advance in the map deployment and position and orientation estimation server 1202, which is another information processing apparatus that calculates the position and orientation of the imaging apparatus for any image information of the environment maps. In addition, it is possible to register the "deployment server information 1301" related to the information processing apparatus (the map deployment and position and orientation estimation server 1202) in which the environment map is deployed into the memory may be registered to the 3D environment map 1222.

Note that, the deployment server information 1301 is not a part of the 3D environment map 1222, and may be held in another information and DB that may be referred from the 3D environment map 1222. That is, depending on implementation of data, the deployment server information 1301 may divide and hold the data in the other data and the DB. As described above, the deployment server information 1301 may be held so that the information processing apparatus (the map deployment and position and orientation estimation server 1202) in which the environment map is deployed into the memory may be easily specified.

The map deployment and position and orientation estimation server 1202 (1202a to 1202c) is a processing server that performs the position and orientation estimation process such as SLAM. Any 3D environment map 522 designated in the map deployment registration unit 1212 is read in advance and deployed into the memory, in-vehicle data and GNSS information to be processed at any timing by a stream or any communication unit are acquired, and position and orientation estimation is calculated and output.

As a result, it is possible to the perform position and orientation estimation process in more real-time. The number of 3D environment maps 522 deployed into one map deployment and position and orientation estimation server 1202 is any number, and when the plurality of 3D environment maps 522 are deployed, position and orientation estimation using all the 3D environment maps 522 deployed at one time may be performed. Therefore, there is an advantage in that a processing time may be further shortened, in particular, when position and orientation estimation on in-vehicle data of a driving route including a plurality of maps is performed, or the like.

In the same manner as the movement route and movement direction comparison unit 513 in Embodiment 1, the movement route and movement direction comparison unit 1213 compares route information (the route information 803 illustrated in FIG. 8) of a plurality of 3D environment maps 522 including an acquisition position when the moving object 503 or the in-vehicle device 502, which is an example of an acquisition apparatus mounted on the moving object 503, acquires data with route information acquired from the target moving object 503 of which position and orientation is to be calculated or the acquisition apparatus (the in-vehicle device 502) mounted on the target moving object.

Then, based on the comparison result, the 3D environment map 1222 is specified. Further, the map deployment and position and orientation estimation server 1202 in which the specified 3D environment map 1222 is deployed is specified, from the deployment server information 1301 which is information on the map deployment and position and orientation estimation server 1202 included in the specified 3D environment map 1222.

In this manner, a plurality of environment maps are deployed into the memory in advance on the map deployment and position and orientation estimation server 1202, which is another information processing apparatus that calculates the acquisition position and orientation of any in-vehicle data of the environment map, and the deployment server information 1301 which is information on the specified map deployment and position and orientation estimation server 1202 is included and the 3D environment map 1222 (1222a to 1222c) is set, so that it is possible to specify the map deployment and position and orientation estimation server 1202 in which the specified calculation environment map is deployed in the memory.

The position and orientation estimation unit 1214 inputs the in-vehicle data and the GNSS information of the position and orientation estimation target to the specified map deployment and position and orientation estimation server 1202 to calculate a position and orientation, and outputs an estimation position and orientation 523. In this manner, the position and orientation result calculated by the specified map deployment and position and orientation estimation server 1202 may be acquired.

### (Processing Procedure of Environment Map Creation Unit 511 and Map deployment Registration Unit 1212)

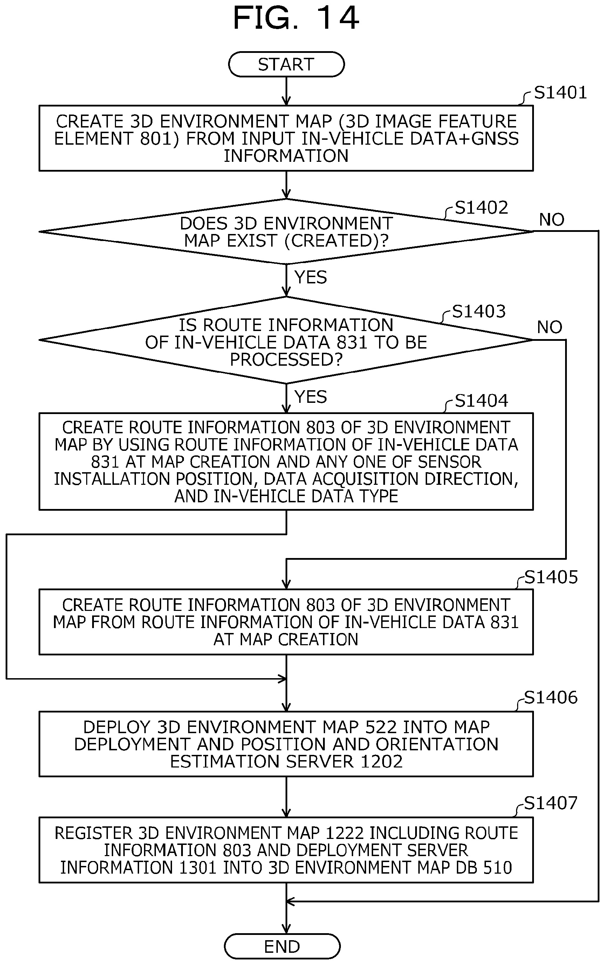

FIG. 14 is a flowchart illustrating an example of processing of an environment map creation unit and a map deployment registration unit according to Embodiment 2. In the flowchart in FIG. 14, each process in steps S1401 to S1405 have the same contents as each process in steps S901 to S905 in the flowchart in FIG. 9. That is, the processing in steps S1401 to S1405 may be performed by the environment map creation unit 511.

After step S1405, the 3D environment map 522 (the 3D image feature 801) is deployed in the map deployment and position and orientation estimation server 1202 (step S1406). Then, the 3D environment map 1222 including the route information 803 and the deployment server information 1301 is registered in the 3D environment map DB 510 (step S1407). Thus, a series of processes is ended. Each process in steps S1406 and S1407, for example, may be performed by the map deployment registration unit 1212.

### (Processing Procedure of Movement Route and Movement Direction Comparison Unit 1213 and Position and Orientation Estimation Unit 1214)

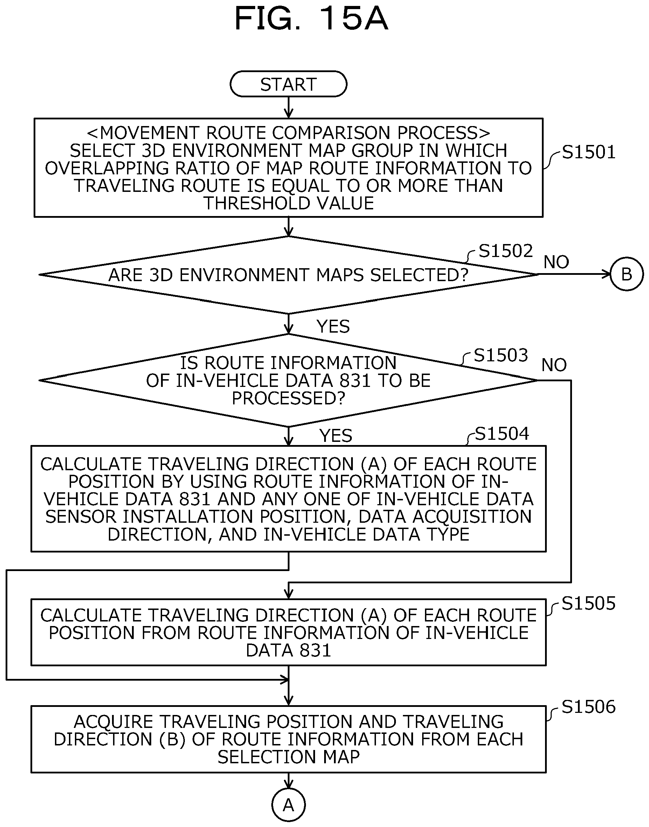

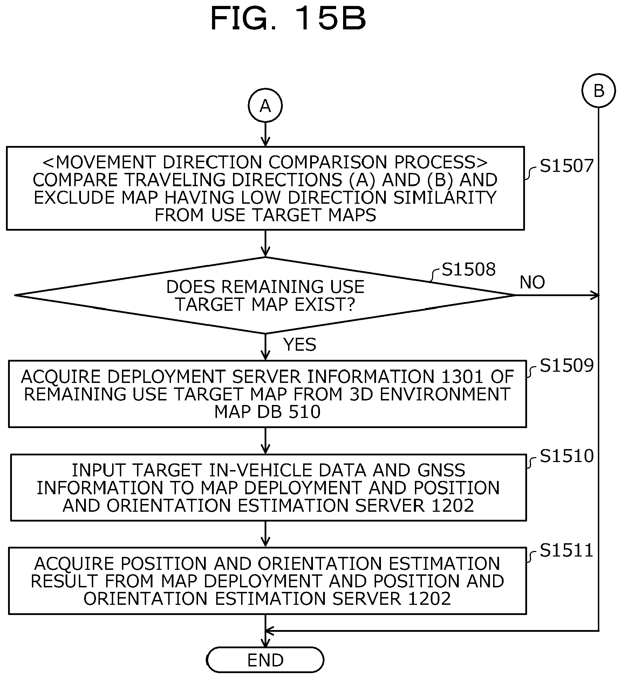

FIGs. 15A to 15B are a flowchart illustrating an example of processing of a movement route and movement direction comparison unit and a position and orientation estimation unit according to Embodiment 2. In the flowchart in FIG. 15A and 15B, each process of step S1501 to step S1508 has the same contents as each process of step S1101 to step S1108 in the flowchart in FIG. 11. That is, the processing in step S1501 to step S1508 may be performed by the movement route and movement direction comparison unit 1213.

After step S1508, the deployment server information 1301 of the remaining use target map is acquired from the 3D environment map DB 510 (step S1509). Next, the target in-vehicle data and GNSS information are input to the map deployment and position and orientation estimation server 1202 specified by the acquired deployment server information 1301 (step S1510). Then, the position and orientation estimation result is acquired from the map deployment and position and orientation estimation server 1202 (step S1511). Thus, a series of processes is ended. Each process in step S1509 to S1511 may be performed by the position and orientation estimation unit 1214, for example.

Note that, a system in which Embodiment 1 and Embodiment 2 are mixed may be used. That is, only some 3D environment maps such as 3D environment maps related to roads for which position and orientation estimation is highly desirable or for which real-time position and orientation estimation is more desirable are deployed in the map deployment and position and orientation estimation server 1202, and position and orientation estimation process is executed, as described in Embodiment 2. On the other hand, for other roads, for example, roads for which there is little request for position and orientation estimation or for which there is no request for real-time position and orientation estimation, the position and orientation estimation process may be executed by deploying the map at any time when the position and orientation estimation is desirable, as described in Embodiment 1.

For example, only important roads such as arterial roads on which a large number of vehicles travel are deployed in the map deployment and position and orientation estimation server 1202, so that it is possible to obtain a system that realizes as many position and orientation estimation requests as possible in real-time while reducing a server cost as much as possible.

As described above, according to Embodiment 2, the map deployment registration unit 1212 reads and deploys a map in the map deployment and position and orientation estimation server 1202 in advance. Then, the map may not be read and deployed at a timing of performing the position and orientation estimation process. Thus, it is possible to shorten (reduce) a reading and deployment time that is a bottleneck of the processing in SLAM or the like. Therefore, the position and orientation estimation at a higher speed and in real-time may be realized.

Note that, the position and orientation calculation method described in the present embodiment may be achieved by causing a computer, such as a personal computer or a workstation, to execute a program prepared in advance. A program for distributing the foregoing programs is stored in a computer-readable recording medium, such as a hard disk, a flexible disk, a compact disc (CD)-ROM, a magneto-optical (MO) disk, a Digital Versatile Disc (DVD), or a Universal Serial Bus (USB) memory. The program for distributing the programs is read by the computer from the recording medium and executed by the computer. In addition, the position and orientation calculation program may be distributed via a network such as the Internet.

## Claims

1. A position and orientation calculation method performed by an information processing apparatus, the position and orientation calculation method comprising:
comparing first route information of a plurality of environment maps including an acquisition position when a moving object or an acquisition apparatus mounted on the moving object acquires data with second route information acquired from a target moving object or an acquisition apparatus mounted on the target moving object whose position and orientation is to be calculated; and
specifying a calculation environment map to be used for calculation of a position and orientation when the target moving object or the acquisition apparatus mounted on the target moving object acquires the data, from the plurality of environment maps, based on a result of the comparison.

2. The position and orientation calculation method according to claim 1, wherein
the specified calculation environment map includes route information, which is similart to at least any one of a movement route or a movement direction in the second route information acquired by the target moving object or the acquisition apparatus mounted on the target moving object.

3. The position and orientation calculation method according to claim 1, wherein
the specified calculation environment map includes route information, which is similar to a movement route and a movement direction in the second route information acquired by the target moving object or the acquisition apparatus mounted on the target moving object.

4. The position and orientation calculation method according to claim 2 or 3, wherein
the movement route and the movement direction are corrected based on at least any one of a type of the acquisition apparatus, an installation position of the acquisition apparatus, or an acquisition direction of the data acquired by the acquisition apparatus.

5. The position and orientation calculation method according to any one of claims 1 to 4, further comprising:
setting a two-dimensional or three-dimensional predetermined shape having any size centered at each position of the first route information, or at each acquisition position of the data acquired from the target moving object or the acquisition apparatus mounted on the target moving object whose position and orientation is to be calculated,
determining a degree of overlapping of routes by using shape inside or outside determination of the predetermined shape, wherein
the specifying includes specifying the calculation environment map based on a result of the determination.

6. The position and orientation calculation method according to any one of claims 1 to 4, further comprising:
setting a two-dimensional or three-dimensional predetermined shape having any size including a route in the first route information or the second route information, and
determining a degree of overlapping of routes by using shape inside or outside determination of the predetermined shape, wherein
the specifying includes specifying the calculation environment map based on a result of the determination.

7. The position and orientation calculation method according to claim 5 or 6, further comprising:
calculating a use priority of the calculation environment map, based on the degree of overlapping of the routes.

8. The position and orientation calculation method according to any one of claims 1 to 7, further comprising:
deploying the plurality of environment maps in a memory in advance in another information processing apparatus that calculates a position and orientation when the target moving object or the acquisition apparatus mounted on the target moving object acquires the data; and
specifying the other information processing apparatus in which the specified calculation environment map is deployed in the memory.

9. The position and orientation calculation method according to claim 8, further comprising:
registering information about the information processing apparatus in which an environment map included in the plurality of environment maps is deployed in the memory, in the environment map.

10. The position and orientation calculation method according to claim 8 or 9, further comprising:
acquiring a position and orientation result calculated by the specified information processing apparatus.

11. The position and orientation calculation method according to any one of claims 1 to 8, further comprising:
creating a search index for the first route information; and
searching the plurality of environment maps by using the index.

12. A position and orientation calculation program in which an information processing apparatus performs processing of:
comparing first route information of a plurality of environment maps including an acquisition position when a moving object or an acquisition apparatus mounted on the moving object acquires data with second route information acquired from a target moving object or an acquisition apparatus mounted on the target moving object whose position and orientation is to be calculated; and
specifying a calculation environment map to be used for calculation of a position and orientation when the target moving object or the acquisition apparatus mounted on the target moving object acquires the data, from the plurality of environment maps, based on a result of the comparison.

13. An information processing apparatus comprising:
a movement route and movement direction comparison unit configured to compare first route information of a plurality of environment maps including an acquisition position when a moving object or an acquisition apparatus mounted on the moving object acquires data with second route information acquired from a target moving object or an acquisition apparatus mounted on the target moving object whose position and orientation is to be calculated; and
a map acquisition unit configured to specify a calculation environment map to be used for calculation of a position and orientation when the target moving object or the acquisition apparatus mounted on the target moving object acquires the data, from the plurality of environment maps, based on a result of the comparison.
